# EUROPEAN PATENT APPLICATION

(11) **EP 2 556 887 A1**
(43) Date of publication of application: **13.02.2013**
(21) Application number: 11176811.5
(22) Date of filing: 08.08.2011
(51) Int. Cl.: B01L 3/00, G01N 29/02

(54) **Improved microfluidic devices useful for selective exposure of one or more sample liquids to one or more sample regions**

(71) Applicant: SAW instruments GmbH, 53177 Bonn (DE)
(72) Inventor: Götz, Ulrich, 53177 Bonn (DE); Perpeet, Markus, 53177 Bonn (DE)
(74) Representative: Molnia, David

(57) **Abstract**

The present invention relates to improved microfluidic devices, apparatuses that include, and components of, said microfluidic devices. Further, the present invention also relates to methods involving the foregoing. The improved microfluidic devices may, in particular, include a surface acoustic wave (SAW) sensor as the sample region to which a sample liquid is exposed. The microfluidic devices of this invention provide a simple and flexible solution to one or more problems of prior art microfluidic devices, for example enabling one or more subsets of a plurality of sample regions to be exposed, such as in a selective and/or predetermined manner, to one or more sample liquids. Such functionality has particular advantages for the operation, flexibility, throughput, reliability and otherwise for the performance of the devices when in use

## Description

The present invention relates to improved microfluidic devices, apparatuses that include, and components of, said microfluidic devices. Further, the present invention also relates to methods involving the foregoing. The improved microfluidic devices may, in particular, include a surface acoustic wave (SAW) sensor as the sample region to which a sample liquid is exposed. The microfluidic devices of this invention provide a simple and flexible solution to one or more problems of prior art microfluidic devices, for example enabling one or more subsets of a plurality of sample regions to be exposed, such as in a selective and/or predetermined manner, to one or more sample liquids. Such functionality has particular advantages for the operation, flexibility, throughput, reliability and otherwise for the performance of the devices when in use.

Chemical and biological testing is commonly used to test for the presence or absence of chemical or biological analytes. Testing for the presence of chemical or biological analytes in blood, food or other materials can be performed to ensure safety or to facilitate diagnosis of medical conditions. For example, testing is used to identify chemicals, bacteria or other analytes in blood samples taken from medical patients, laboratory samples developed for experimental purposes, food samples, or the like. In addition, chemical and biological testing is also used to test for medical conditions such as pregnancy, diabetes, and a wide variety of other conditions that may affect the patient's chemistry or biology. In another application, testing for binding and quantifying amounts or binding affinities of chemical or biological analytes is routinely conducted within research laboratories. For example, an understanding of the binding properties of a drug candidate to its molecular target, or a therapeutic antibody to its antigen, can greatly enhance the understanding of the mechanism of action of therapeutic agents and/or their side-effects. In yet another application, testing for analytes such as drugs or explosives may be conducted for the purposes of security and law enforcement. In this specialised application, samples may be collected from sweat, breath or surface swabs, generating a particularly demanding requirement for sensitivity, such as described in Frisk et al (Lab Chip 8: 1504, 2006).

Such testing is now commonly conducted using automated or semi-automated processes and/or instrumentation that typically pass a liquid sample along a fluid path. Accordingly, and as a general description for such processes, a sample liquid to be subjected to testing the presence of chemical or biological analytes (including mixtures of liquids) is typically exposed to one or more sample regions in the fluidic path in order to store, analyse, separate or provide any kind of processing step to such sample liquid. Therefore, as used herein "sample region" refers to any portion of a microfluidic device that provides storage, analysis, separation or that provides, conducts or is otherwise involved in any processing step on or with the sample liquid. A sample region provides a function or imparts a step in a process, that is more than merely transport of the sample liquid. In the particular case of a sample region that is involved in the analysis of a sample liquid or components therein, the sample region is considered a sensor (or sensor region), for example a sensor surface.

Unlike classical analysis assays such as tube and slide coagulase tests or immunoassays the microfluidic devices of the present invention, when used for analysis, employ an integrated sensor. As used herein "sensor" refers to a device that detects a change in at least one physical property and produces a signal, or induces a change in a signal, in response to the detectable change. The manner in which the sensor detects a change may include, e.g., acousto-mechanical changes, electrochemical changes, optical changes, electro-optical changes, etc. For example, acousto-mechanical sensors can utilise resonant frequency, phase-shifts, piezoelectric properties, etc, and electrochemical sensors utilise potentiometric and amperometric measurements, whereas optical sensors may utilise absorbance, fluorescence, luminescence and evanescent waves.

One type of acousto-mechanical sensor that has been developed for chemical or biological sensing capabilities is a surface acoustic wave (SAW) sensor. One example of a SAW is a Love mode shear-horizontal surface acoustic wave (SH-SAW) sensor. A SH-SAW sensor includes four main components: 1) a piezoelectric substrate; 2) an input inter-digitated transducer (IDT) on the substrate, which is used to excite an acoustic wave based on the piezoelectric effect; 3) an output IDT on the substrate, which receives the transmitted acoustic wave and generates electrical output by exploiting the piezoelectric effect; and 4) a wave-guide layer over the IDT's, which confines the wave to the guiding layer, thereby transmitting the wave from the input IDT to the output IDT. The presence of one or more materials on the surface of the SH-SAW affects wave propagation through the waveguide layer, which facilitates detection of the given analyte. For example the SAW sensor may be of the layered type where a biological sensitive layer is located on the surface of the SAW device. A gold film or silicon dioxide layer may be deposited on the surface. For example, gold interacts with high affinity to proteins and it can be used with specific antibodies for antigen detection. In operation, a SAW sensor is electrically coupled to a circuit, which sends signals to, and receives signals from, the SAW sensor. Typically, the circuit incudes a high-frequency signal generator.

There is a continuing trend to reduce the size of microfluidic devices that comprise sample regions such as the sensors described above, primarily driven by a need to yet further reduce the amount of liquids that comprise the samples themselves or, in particular, to reduce the amount of reagent needed for the detection of a given analyte. In the case of microfluidic devices comprising sensor regions, such sensor regions can work with quantities of liquid as small as in the micro-litre range. These small volumes of liquid need to be introduced into the microfluidic devices and provided to a sample region, so that it is exposed to the sample liquid (such as a liquid for analysis or a common reagent) in order for (in the case of a sensor region) the sensor to detect the presence of an analyte in the sample liquid. Hence, these systems generally consist of microstructured closed channels, which transport fluid to and/or across one or more sample regions being sensor regions such as sensor surfaces. The movement of the liquid, can be caused by a variety of processes, including: mechanical micropumps, electrical kinetic methods, electrosmosis, hydrostatic pressure differentials, capillary forces, centrifugal forces, so called "Electrowetting" ("Creating, Transporting, Cutting, and Merging liquid Droplets by Electrowetting Based Actuation for digital Microfluidic Circuits"; Cho S.K., Moon H. Kim C.J.; Journal of Microelectromechanical Systems; 12(1): 70-80, 2003) or also by surface acoustic wave techniques adapted to transport liquids on surfaces, like for example in "Flatland fluidics" (Wixforth A., Scriba J. and Gauer C. in mstnews 5/02, side 42-43).

Also there is another continuing trend towards yet higher throughput and complexity of analyses, for example the total number of sample liquid/sample region exposures that are required for any particular investigation. Such complexity may arise from either of two perspectives, being a desire to: (i) analyse a larger number of different sample liquids for the same analytes by using a larger number of near-identical sensor regions (ie sample regions); or to (ii) analyse a single (or small number of) sample liquid(s) for a number (sometimes a large number) of different analytes by using an appropriate number of different sensor regions, each adapted to analyse a different analyte. For certain applications, the scope of the investigation may require both such dimensions of analyses to be conducted - ie to analyse a large number of different sample liquids for a large number of different analytes (ie using a large number of different sensor regions). Accordingly, any microfluidic device used for such an application would, advantageous, have a higher throughput and higher flexibility to deal with such number and/or complexity of analysis, or such device would, advantageous, be more reliable and/or easier to setup or operate.

In the field of biomedical and drug-research, such complexity can easily be envisioned by, for example: (a) hundreds of patient blood samples needing to be tested for tens of blood groups, blood markers or blood-borne infections; or (b) the analysis of hundreds of drug-candidates for binding to tens of medically-relevant protein targets. Indeed, libraries of drug-like molecules of several hundreds of thousands have been commonplace in the pharmaceutical industry for some years, and if such numbers of molecules are to be analysed against only a subset of the tens of thousands of human genes (and variants thereof) now available to the research scientist as a result of the genomics revolution, the need for highly efficient and flexible microfluidic devices for the conduct of such binding studies can easily be envisioned.

Therefore in such a regard, and particularly for microfluidic devices or applications involving analysis tests, it would be advantageous to provide microfluidic devices that provide for flexibility and/or scalability.

Such scales and complexities also highlight the drive behind the continued development of yet smaller and more compact devices, such that multiple tests on small quantities of (often rare or expensive) liquid samples can be conducted. Accordingly, the channels constructed within many such microfluidic devices are often less than a few millimetres across or deep, sometimes less, including only hundreds of micrometers. However, such channels are usually very long relative to their cross-section, so that the surface area of the boundaries of the channels in contact with the fluid is relatively large in comparison to the volume of liquid they contain. Hence, there is significant potential for surface tension or friction effects at the boundaries of the channels. Without being bound by theory, it is believed that such effects are responsible for the retention of obstacles such as bubbles in the channels; a common problem for virtually all kinds of lab-on-a-chip microfluidic devices.

As used herein "obstacle" refers to any undesired or unexpected composition that hinders the flow of liquid, particularly within a microfluidic device, such as in a sample region or channel therein. An obstacle may be a solid particle, such as dust, a cell or cell-clump, a fragment of fabrication material, or a fibre such as a hair or a fibre from a textile. Equally, an obstacle may be a precipitate or crystal that arises out of the liquid itself. Alternatively, an obstacle may be a gas, particularly a bubble of air or another gas or vapour, or more generally a void formed from the absence of liquid. An obstacle may also be another liquid that is the same or different to the first liquid. Such kinds of liquid obstacles may arise when different liquids having different densities or hydrophobicity such as an oil and an aqueous solution, are used within a channel. A liquid obstacle may also be formed from a drop of a liquid having the same density and hydrophobicity yet having a different surface tension to another liquid. An obstacle may arise from a source intrinsic to the microfluidic device or channel, such as a fragment that dislodges from the walls of the channel, or a contaminant or remainder of the material used to construct the channel. Alternatively, an obstacle may arise from a source extrinsic to the microfluidic device or channel. That is, it is introduced into the system from being present within the liquid itself. One particular form of obstacle, such as a bubble or dust, may arise either intrinsically or externally. For example, a bubble may already be present in the liquid as it is introduced into the channel, or may be formed only once the liquid has been introduced into the channel. This may occur due to gases dissolved within a liquid coming out of solution, or from evaporation of the liquid itself. For example, bubbles may be formed from spontaneous degassing of a liquid, especially if a liquid reservoir is held at a different temperature compared to the sensor unit, wherein a change in temperature of the liquid can affect the gas-carrying capacity of the liquid as it passes from the reservoir to the sensor unit.

With respect to certain microfluidic devices and/or applications, air (bubbles in particular), dust and/or other obstacles can be introduced when a subunit, portion or the complete device is manipulated in a manner that the liquid, sample region, channels or other components are exposed to the air. This can occur, for example, if a liquid connection is changed or, in a particular case, the sample region (such as a sensor region/surface) is exposed, exchanged, modified or otherwise interfered with upon manipulation of a portion, subunit or component of the device. Typically, such sensitive components need to be replaced, cleaned or otherwise be subject to maintenance on a regular basis (for example, before each day's use, or even before each experiment), and hence it is often inevitable that obstacles or air will be introduced into the device as a consequence of such actions.

Given the need for higher assay-throughput and flexibility (as described above), microfluidic devices can be designed accordingly; such as with separate and separable subunits, each having a number of sample regions and channels, so as to provide a more scalable design or one that is more practical to manufacture, For example, multiple sensor regions (such as SAW sensor regions) can be more easily, reliably and cheaply provided by multiple smaller chips, each containing a smaller number of sensor regions, than by providing a single large chip containing the total number of sensor regions. A microfluidic device having such a subunit based design provides numerous other advantages, including that replacement of a non-functioning portion of the device can be achieved by replacing only the subunit comprising the non-functioning portion, without having to replace large parts of the device. However, simply due to the laws of probability, the replacement (or other manipulation) of any one or more such subunits in such a microfluidic device becomes increasingly likely and frequent as the complexity and scale of such subunit-based microfluidic devices increases (such as by having multiple subunits).

Therefore, one particular manner in which air, bubbles or other voids can be formed within channels, sample regions or elsewhere in the microfluidic device is of special relevance as the complexity of microfluidic devices increases, particularly if the device is designed on the basis of subunits; that is when a liquid is first introduced to an empty, or substantially empty, portion, subunit of the device (such as after a component of the device has been opened, repaired or otherwise the liquid or internal features of the device are exposed to air). As a liquid is introduced into a dry, or especially if introduced into a partially-dry, microfluidic device or any of its component sections or subunits, then bubbles or other voids may form or air may become trapped, particularly if the flow rate or pattern of the liquid into or through the microfluidic device, in particular into or through a channel or sample region therein, is not controlled. In a related situation, bubbles or other voids may form or air may become trapped if portions of the microfluidic device, such as sets of sample regions, are not filled with liquid in an appropriate sequence or order.

Various solutions are known in the prior art to seek to reduce the likelihood of bubble- or void-formation or their initial introduction into microfluidic devices (for example, as discussed herein and in co-pending patent application EP10171508.4). However, a more robust approach to such a problem is one in which such bubbles, air or voids may be removed practically and simply. More generally, it would be desirable if any other fluid (such as gases like air, or even other undesired liquids) can be removed practically and simply, from a specific portion of the microfluidic device (such as a sample region, or a subunit of the device), without affecting or introducing such undesired fluid into another specific portion of the microfluidic device.

Therefore in such a regard, and particularly for microfluidic devices or applications where such a situation is prone to occur, it would be advantageous for microfluidic devices to provide a solution for such rapid and simple removal of bubbles, voids (or more generally any other fluid such as gasses, air or even other undesired liquids) or other obstacles. Similarly, a solution that provides for controlled filling of liquid within the device would simplify, assist and/or make more reliable the preparation of the device ready for use, or in particular for the preparation of one or more sample region such as a SAW sensor region.

If an obstacle, such as a void like a bubble, is retained within a microfluidic device, it can significantly impair its performance of the process it is supposed to conduct such as the functioning of any detection assay, especially if quantitative detection is desired. This sensitivity to obstacles such as bubbles is common to virtually all sensor technologies used to detect the presence of chemical or biological analytes. However, by way of example, and because a SAW sensor is highly sensitive to changes in mass at its sensing surface, an obstacle retained on the surface of the SAW sensor region that is not desired to be detected, whether it is a solid obstacle like a dust particle or a gaseous obstacle like a bubble, will affect the surface-mass and hence could significantly affect the propagation of the acoustic wave through the waveguide layer: leading to incorrect or undesired signals. An obstacle, like a bubble, may also be retained elsewhere in the fluidic-flow features of a microfluidic device, such as in microfluidic channels, and yet still have a detrimental effect on the correct or optimal performance of said microfluidic device. For example, a bubble retained in the fluidic system either before or after a sensor region will restrict the cross-section of a channel and with certain liquid-flow systems may significantly reduce the flow-rate of liquid through said channel, and hence across the surface of the SAW sensor region. Such a reduction in flow-rate, especially if the obstacle completely restricts the channel and hence blocks the flow of fluid, will have significant effects on the desired or expected performance of the SAW sensor region, and can manifest itself with effects such as reduced sensitivity, stability, accuracy, reliability and or reproducibility of the detection assay. Analogous problems are also seen if an obstacle is retained in micro-fluidic "lab on a chip" microfluidic device based on other detection technologies, particularly those that also utilise a sensing surface such as surface plasmon resonance (SPR) -based sensor units.

Co-pending application EP10171508.4 describes a microfluidic device with a combination of features that reduce the retention of bubbles and other obstacles in a sensor unit that includes a SAW sensor region. Such device also includes features that aid the visual identification of such bubbles or obstacles, their subsequent dislodgment and hence removal. The multichannel SAW-based microfluidic device described therein exhibits sequential flow of the same sample liquid over all sensor regions.

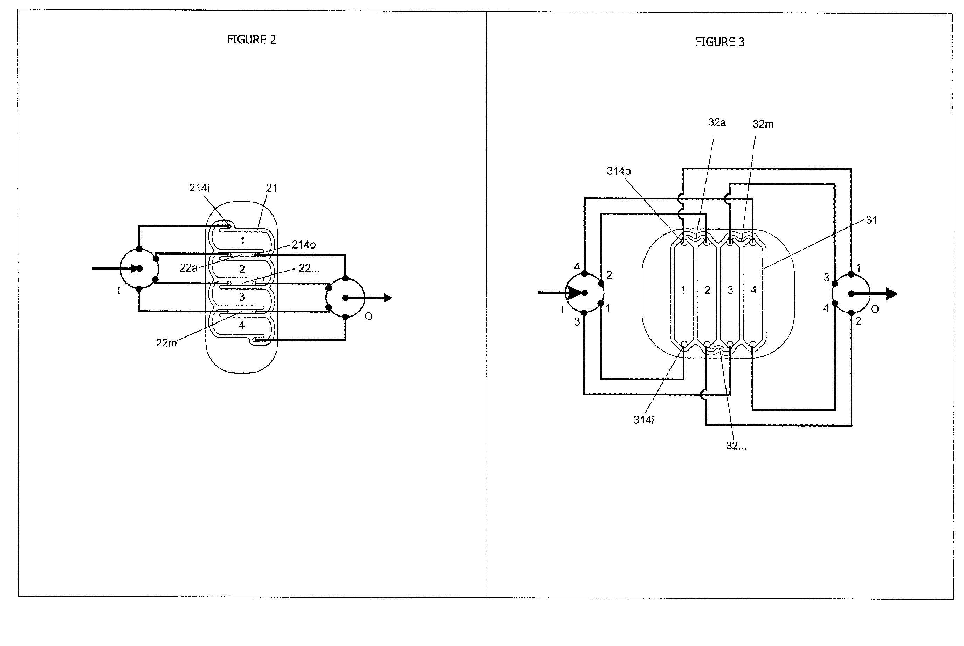

The Biacore 3000 instrument from GE Healthcare provides for selective flow of sample liquid through one or more detector flow-cells from a total of four detector flow-cells, each comprising an SPR sensor region (see FIGURE A, adapted from "Figure 2-8" of "Biacore 3000 Instrument Handbook", GE Healthcare). This selective liquid flow is achieved by the use of various channels and individual valves that act as shut-off valves that regulate the liquid flow to only those detector flow-cells required or desired. A valve design suitable for use in such an application is described in WO 02/36485.

US 2010/9191660 describes a channel switching system that include two microvalves: a first "stopper" valve (that is openable and closable), and a second "water retaining" valve (that is operable to block fluid flow by a surface tension force).

US 5,230,866 describes a microfluidic device that uses a capillary stop-flow junction to redirect liquid flow into various sample regions of the device.

WO 2008/097559 describes the use of oil droplets within a microfluidic device to control the flow of liquid, for example in combination with entrance and exit valves to filling microwells in order (eg see Fig 12 therein).

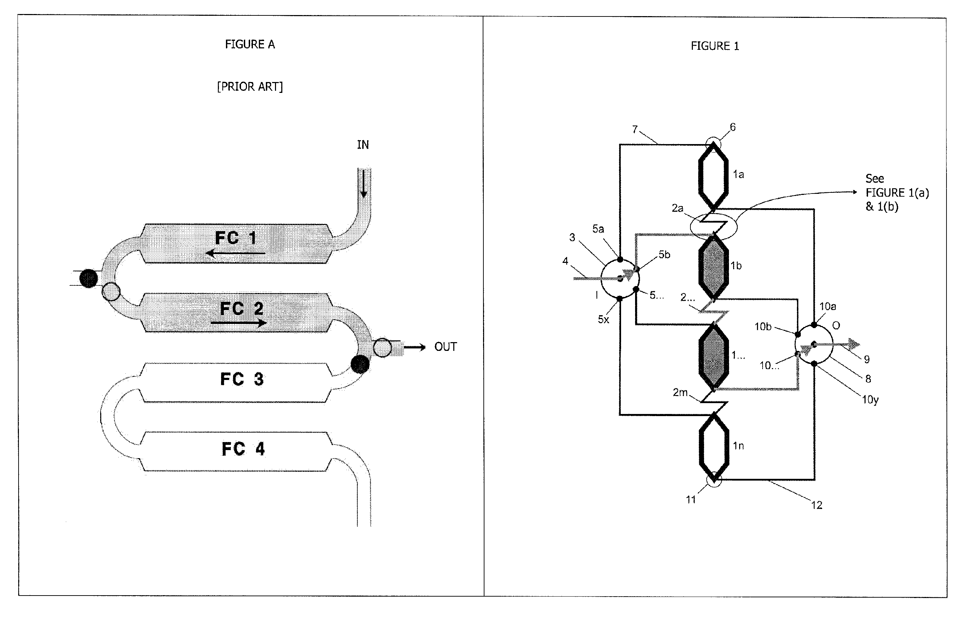

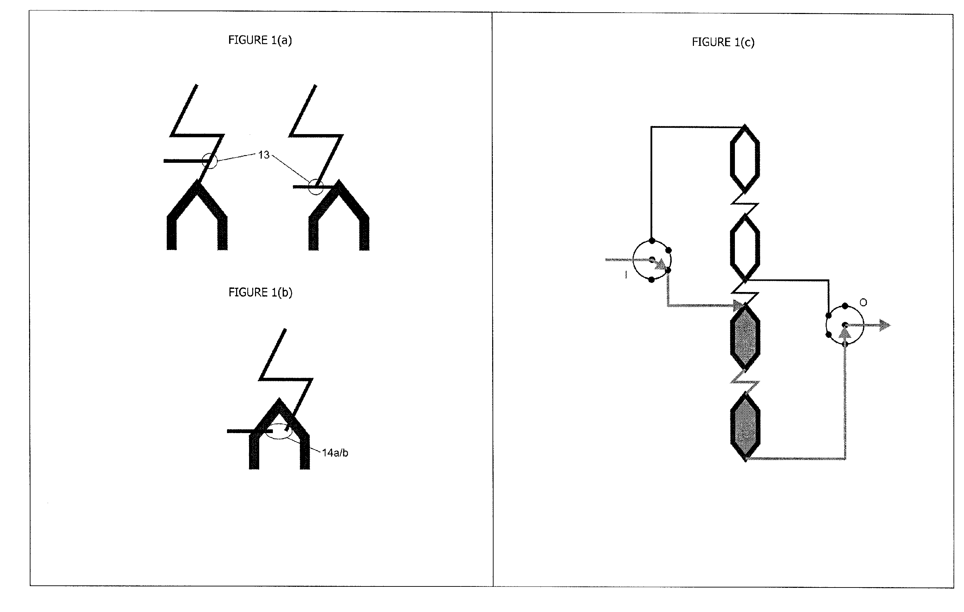

WO 2007/084425 describes an automated microfluidic chip and assay system. By selectively operating inlet valves, a distribution (selection) valve and fluid pumps, various combinations of fluid flow patterns from various reservoirs and along various channels can be achieved (eg, see Fig 1 therein).

US 2010/0028986 describes a reaction container plate and reaction treatment apparatus comprising a switching valve and a plurality of sealed reaction containers linked together by fluid channels either in serial (eg see Fig. 1A therein) or in parallel (eg see Fig. 14A therein).

WO 2009/068201 describes a miniaturised gas analyser formed onto a microchip comprising various separation columns and detectors, individually addressable through the use of a particular arrangement of junctions and shut-off valves to sample a gas from a downstream gas-flow by the use of numerous junctions and shut-off valves.

WO 2009/003520 describes a two-valve arrangement for liquid chromatography, where a first or a second fluid path can be selectively addressed based on the respective settings of a first and second switching valve.

EP 1 586 894 describes a gas chromatograph with multiple separation columns. Gas-flow through any individual separation column is achieved by an input selection valve and an output selection vale, where each selection valve has one output (or input) connected to each separation column.

WO 01/57520 describes an apparatus for carrying out a method for analytical measuring and evaluation for molecular interactions. The apparatus comprises sets of sample feed systems, each switchable (using at least a switching valve) into an analytical flow path with a detector, and where each sample feed system consists of a plurality of sample loops each "successively and mutually individually" addressable using two synchronously switching valves.

Despite all these developments, microfluidic devices, especially those comprising sensors such as SAW sensors, have a number of disadvantages, including having limited throughput, flexibility, efficiency and/or parallelisation, and (especially those designed for high throughput using a subunit-based design) are often subject to undesired functional and/or performance disturbances or perturbations, including those brought about by obstacles such as bubbles introduced or arising in the microfluidic devices; even though the prior-art provides various solutions to redirect fluid-flow or to reduce the frequency of, or to dislodge, such obstacles within microfluidic devices. In one regard therefore, it is desirable to provide an improved microfluidic device with alternative solutions to redirect fluid flow. Such solutions, especially when applied to a multichannel or multi-component microfluidic device (ie, one comprising a plurality of sample regions) provide one or more advantages over existing solutions. For example: (i) the throughput, flexibility and/or efficiency (such as a reduced consumption of sample liquid per channel/assay) of the device can be enhanced; and/or (ii) procedures to remove obstacles from within a microfluidic device, or to fill an empty microfluidic device, can be simplified and/or can be performed in a more robust or reliable manner. Such procedures enable the device to be set up, prepared for operation and/or operated with improved performance, as not only is there an increase in flexibility, scalability and/or throughput, but a reduced likelihood of obstacles being retained and any obstacle that is identified may be removed from an individual portion, subunit or component of the device (such as an individual sample region or a set of sample regions) without affecting other portions, subunits or components (such as sample regions) of the device, for example those that may be ready for or in operation. Therefore, in another regard it is desirable to develop new microfluidic devices, such as those based on SAW sensors, that show improved performance such as in terms of sensitivity, accuracy, stability, reliability, ease of use, robustness and/or reproducibility. Such improvement(s) may have particular utility when such a microfluidic device is used for detection assays.

The present invention, as claimed, defined or otherwise described herein, solves one or more of such problems, overcomes one or more disadvantages of prior-art solutions and/or provides an alternative solution to that provided in the prior-art.

Generally, and by way of brief description, the main aspects of the present invention can be described as follows:

In a first aspect, the invention relates to **a microfluidic device** for liquids comprising:
- a plurality of sample regions connectable in serial liquid continuity via one or more connection channels; and
- a first (input) selection valve with a sample input and plurality of outputs, each valve output connectable to an input for a sample region via a liquid channel; and
- a second (output) selection valve with an sample output and a plurality of inputs, each valve input connectable to an output for a sample region via a liquid channel.

In a second aspect, the invention relates to **a method to expose** a plurality of sample liquids to a plurality of sample regions comprised in a microfluidic device of the present invention, said method comprising the steps of:
- setting at least the first (input) and the second (output) selection valves of said device to provide liquid continuity from the sample input to the sample output via a first set of sample regions; and
- introducing a first sample liquid into the sample input, whereby said first sample liquid flows via and is exposed to said first set of sample regions; and
- setting at least said first (input) and said second (output) selection valves to provide liquid continuity from the sample input to the sample output via a second set of sample regions; and
- introducing a second sample liquid into the sample input, whereby said second sample liquid flows via and is exposed to said second set of sample regions.

In another aspect, the invention relates to **an apparatus** comprising a microfluidic device of the invention and/or an apparatus for practicing a method of the present invention. In yet other aspects, the invention relates to **methods to detect** using a microfluidic device of the invention, **a method to prepare for use** such a microfluidic device, **a flow-cell** for such a microfluidic device and **a computer program product** for the apparatus or a method of the invention.

The figures show:

FIGURE A [PRIOR ART] depicts flow of sample liquid thorough two flow cells ("FC") of a Biacore 3000 instrument. The symbols "o" and "**•**" represent open and closed valves respectively. Valves and channels not used on other flow path arrangements are not included. Adapted from "Biacore 3000 Instrument Handbook", published by GE Healthcare.

FIGURE 1 depicts a figurative representation of one embodiment of the invention: comprising four sample regions (1a to 1n) in serial liquid continuity via connection channels (2a to 2m); a first (input) selection valve (3) with a common input (4) and a series of outputs ports (5a to 5x), each output port connected to an input (6) of a sample region via a liquid channel (7); and a second (output) selection valve (8) with a common output (9) and a series of input ports (10a to 10y), each input port connected to an output (11) of a sample region via a liquid channel (12). FIGURE 1(a) to 1(b) depicts enlarged figurative views of possible liquid continuities and connections between a sample region, a connection channel and an input to (or output from) a sample regions. FIGURE 1(c) depicts figurative representation of a related embodiment of the invention: in which pairs of adjacent sample regions (as opposed to individual sample regions in the previous embodiment) are connectable to the first (input) and second (output) selection valve.

FIGURE 2 depicts one embodiment of the invention: comprising four sample regions (1 to 4) in serial liquid continuity via connection channels (22a to 22m) separate input (214i) and output (214o) connections to each sample region, in each case formed within a flow-cell that has flow boundaries (21); and input (I) and output (0) selection valves connected via liquid channels to said input and output connections for each sample region.

FIGURE 3 depicts a related embodiment to that shown in FIGURE 2: also comprising a flow-cell but that has an alternative pattern of flow boundaries (31).

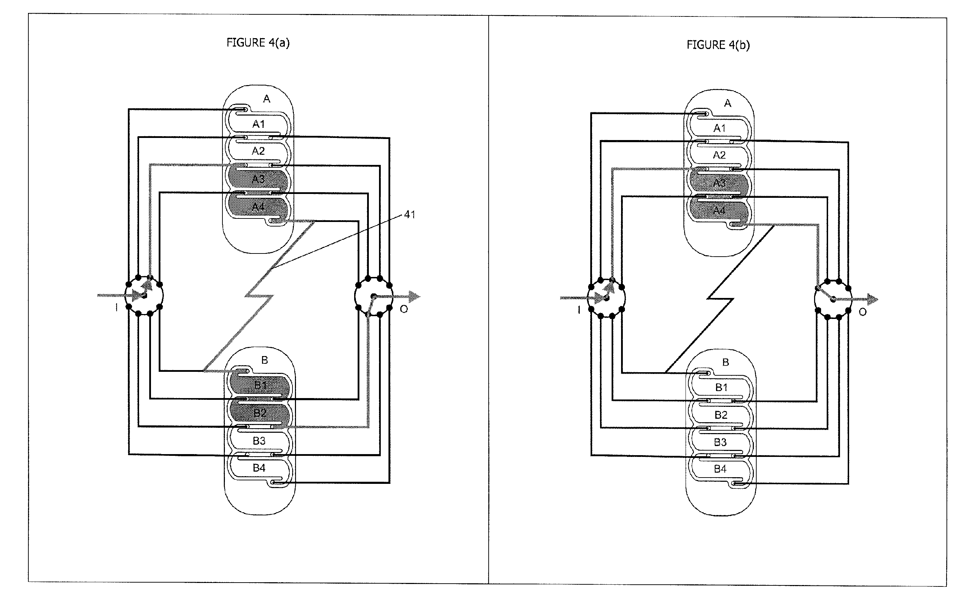

FIGURE 4 depicts another embodiment of the invention: comprising two flow-cells A and B (each, generally as depicted in FIGURE 2) connectable in serial fluid continuity via an interlinking connecting channel (41). FIGURE 4(a) depicts liquid flow to expose sample regions A3 to B2, through interlinking connecting channel (41), by appropriate settings of selection valve (I) and selection valve (O). FIGURE 4(b) depicts an alternative setting of selection valve (O), which selectively exposes only sample regions A3 and A4 to sample liquid introduced into the microfluidic device.

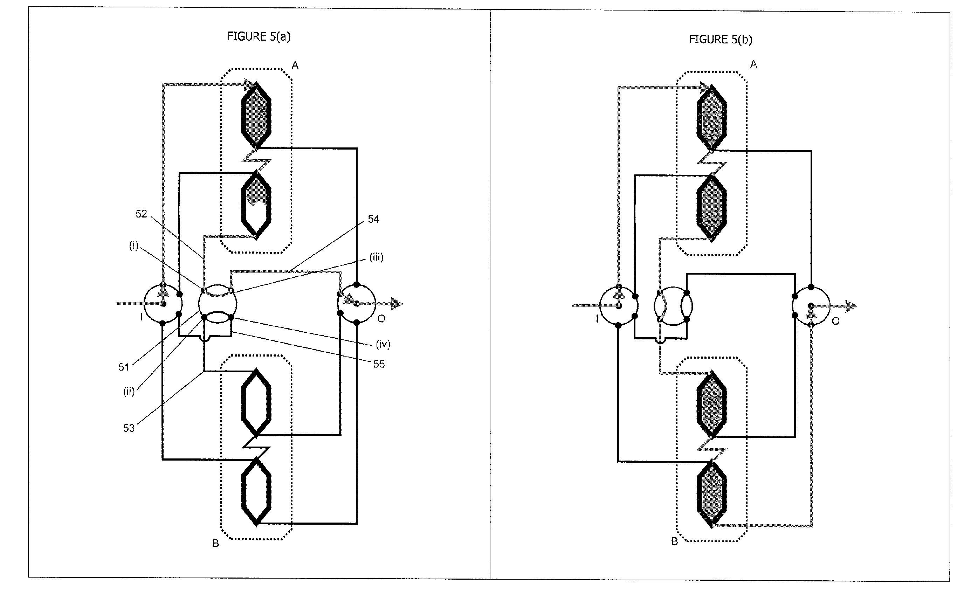

FIGURE 5 depicts a figurative representation of an embodiment of the invention comprising two sub-sets (A and B) of two sample regions and further comprising a switching valve (51) connectable according to the "fill/flush" embodiment of the invention. FIGURE 5(a) depicts liquid flow following the setting of selection valve (I) to input into sensor region A1 and the setting of selection valve (O) to output from sensor region A2. Sample liquid selectively passes from selection valve (I), through and exposes sample regions A1 and A2, through the switching valve (51) set to waste via selection valve (O), thereby filling/flushing the subset of sample regions A without passing liquid into any sample regions of sub-set B. FIGURE 5(b) depicts an alternative setting of switching valve (51) and selection valve (O), which selectively exposes not only sample regions A1 and A2 to sample liquid introduced into the microfluidic device, but also sample regions B1 and B2 via liquid flow though the switching valve (51) into the input of sample region B1 and from the output of B2, though selection valve (O) to waste.

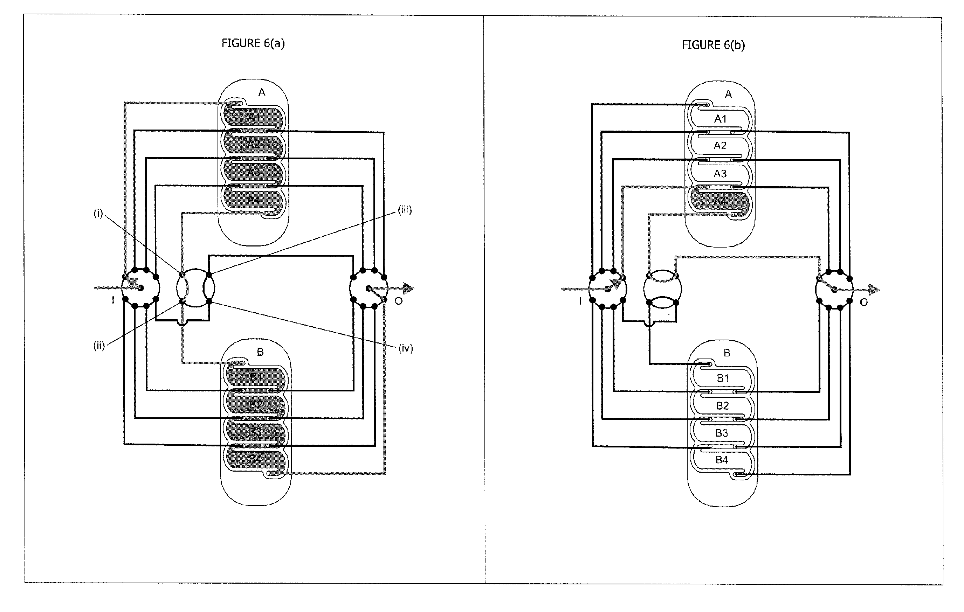

FIGURE 6 depicts another embodiment of the invention: comprising two flow-cells A and B (each, generally as depicted in FIGURE 2) connectable in serial liquid continuity via a switching valve connectable according to the "fill-flush" embodiment of the invention. The liquid continuities of FIGURE 6 are similar to that shown in FIGURE 5, except that each sub-unit of sample regions in FIGURE 6 comprises a flow-cell (A and B) of four sample regions. FIGURE 6(a) shows selection valve (I), the switching valve and selection valve (O) set to expose sample liquid to all eight sample regions A1 to A4 and B1 to B4. FIGURE 6(b) shows selection valve (I), the switching valve and selection valve (O) set to expose sample liquid to only sample region A4 and hence "fill/flush" A4 to waste.

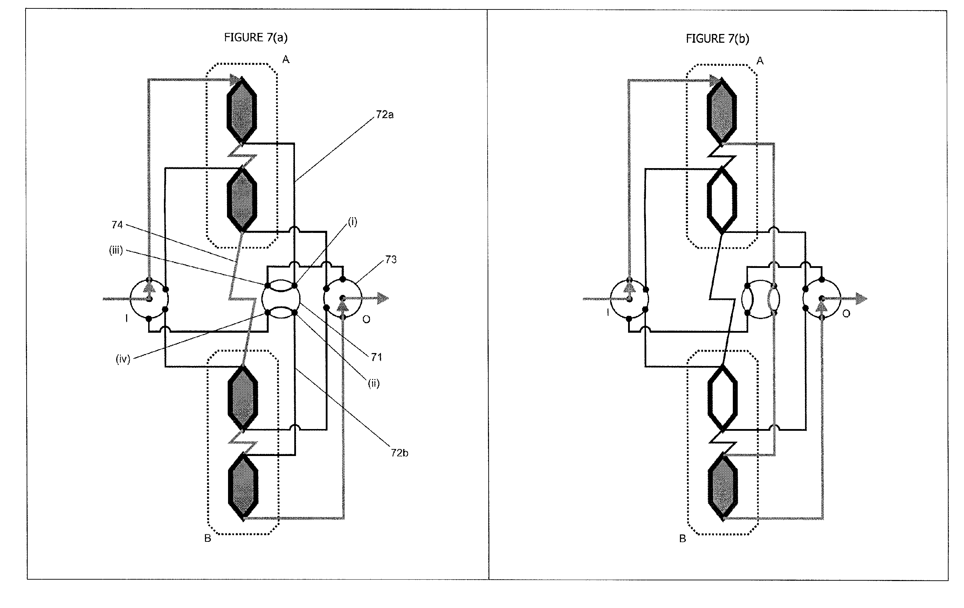

FIGURE 7 depicts a figurative representation of an embodiment of the invention comprising two sub-sets (A and B) of two sample regions and further comprising a switching valve (71) connectable according to the "bridging" embodiment of the invention. FIGURE 7(a) shows the input selection valve (I), the switching valve and output selection valve (O) set to expose sample liquid to all four sample regions A1 to A2 and B1 to B2, with liquid flow passing though the interlinking connection channel (74). FIGURE 7(b) shows the switching valve set to "bridge" liquid flow from the output of A1 to the input of the non-adjacent sample region B2 via bridging connectors (72a/b).

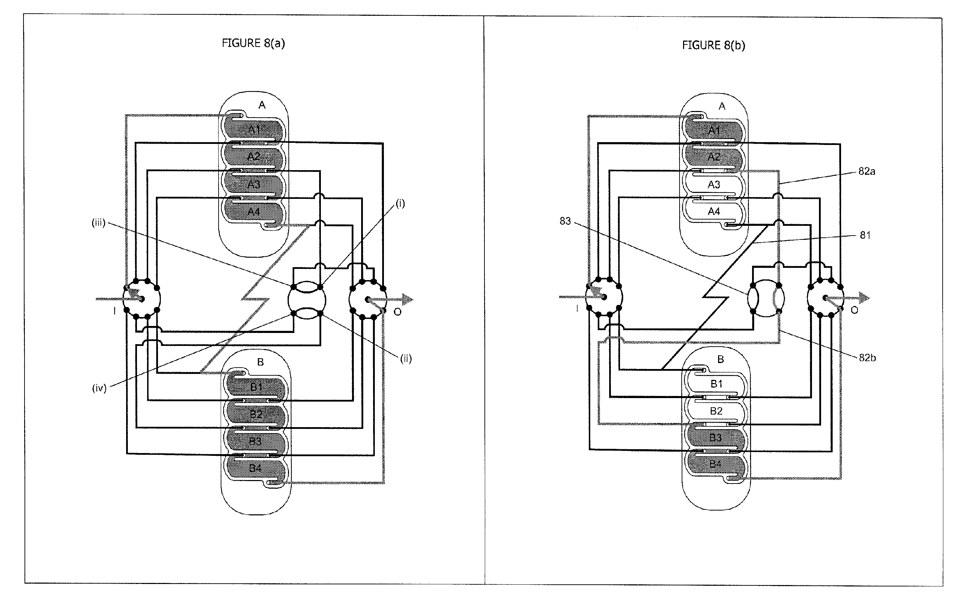

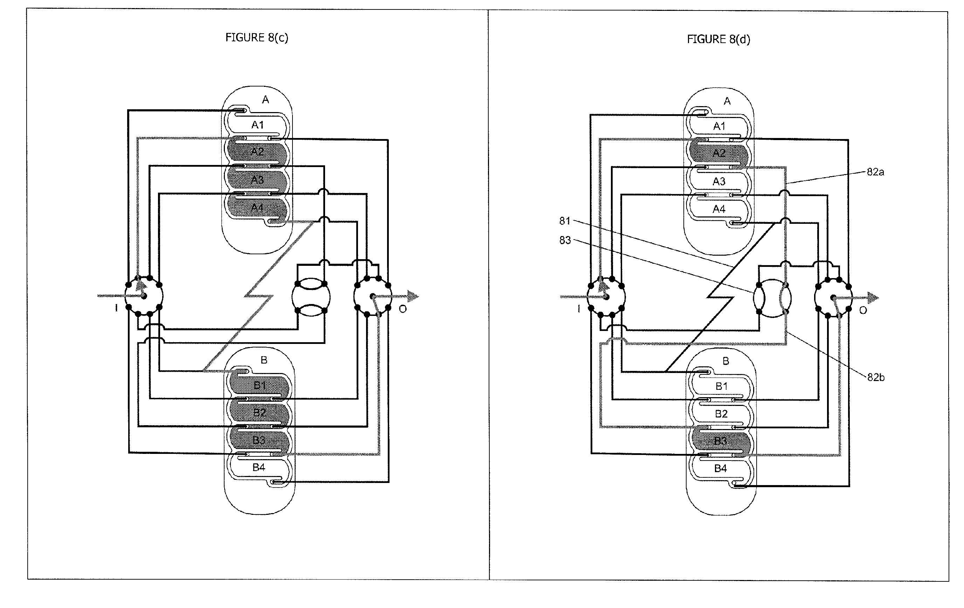

FIGURE 8 depicts another embodiment of the invention: comprising two flow-cells A and B (each, generally as depicted in FIGURE 2) connectable in serial fluid and with a switching valve connectable according to the "bridging" embodiment of the invention. The liquid continuities of FIGURE 8 are similar to that shown in FIGURE 7, except that each sub-unit of sample regions in FIGURE 8 comprises a flow-cell (A and B) of four sample regions, and with the "bridging" connectors (82) bridging between the second sample region of each set of four sample regions. FIGURE 8(a) shows selection valve (I), the switching valve and selection valve (O) set to expose sample liquid to all eight sample regions A1 to A4 and B1 to B4. FIGURE 8(b) shows the switching valve in the "bridge" position, providing liquid continuity from the output of A2 to the input of B3, and hence exposing sample liquid to sample regions A1, A2, B3 and B4. FIGURE 8(c) shows selection valve (I), the switching valve and selection valve (O) set to expose sample liquid to sample regions A2 to A4 and B1 to B3. FIGURE 8(d) shows the switching valve in the "bridge" position, providing liquid continuity from the output of A2 to the input of B3, with sample liquid being exposed to only these two sample regions.

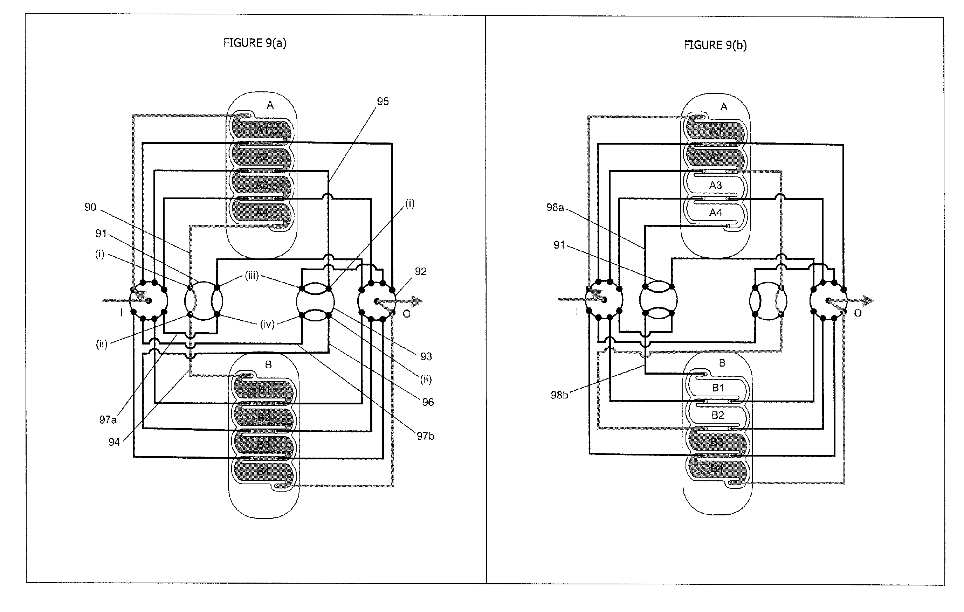

FIGURE 9 depicts another embodiment of the invention: comprising two flow-cells A and B (each, generally as depicted in FIGURE 2) and with two switching valves, one (91) configured to function in "fill/flush" mode and the other (93) to function in "bridging" mode. FIGURE 9(a) shows the valves set to expose sample liquid to all eight sample regions. FIGURE 9(b) shows the two switching valves in their alterative settings and the resulting liquid flow to expose sample regions A1, A2, B3 and B4.

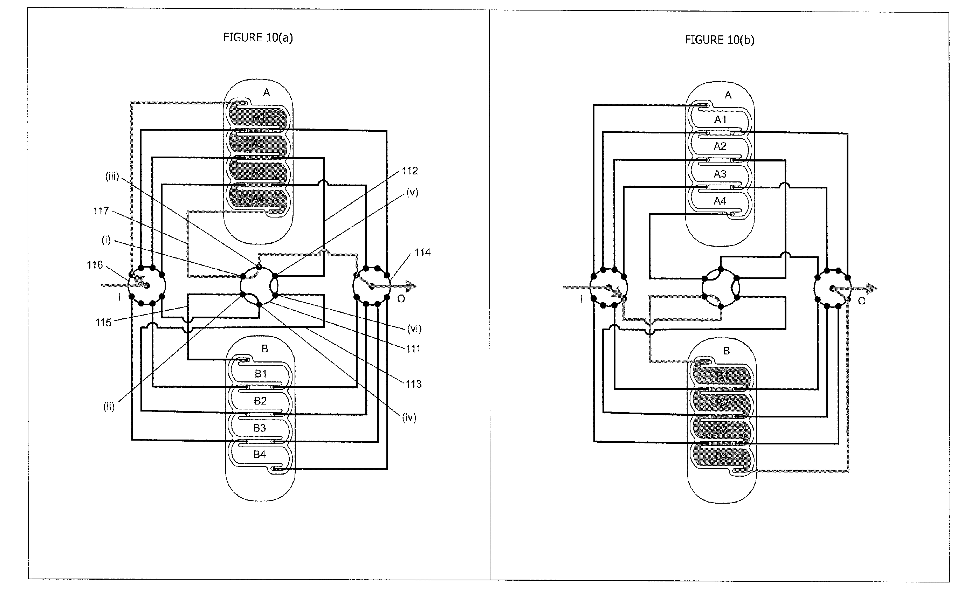

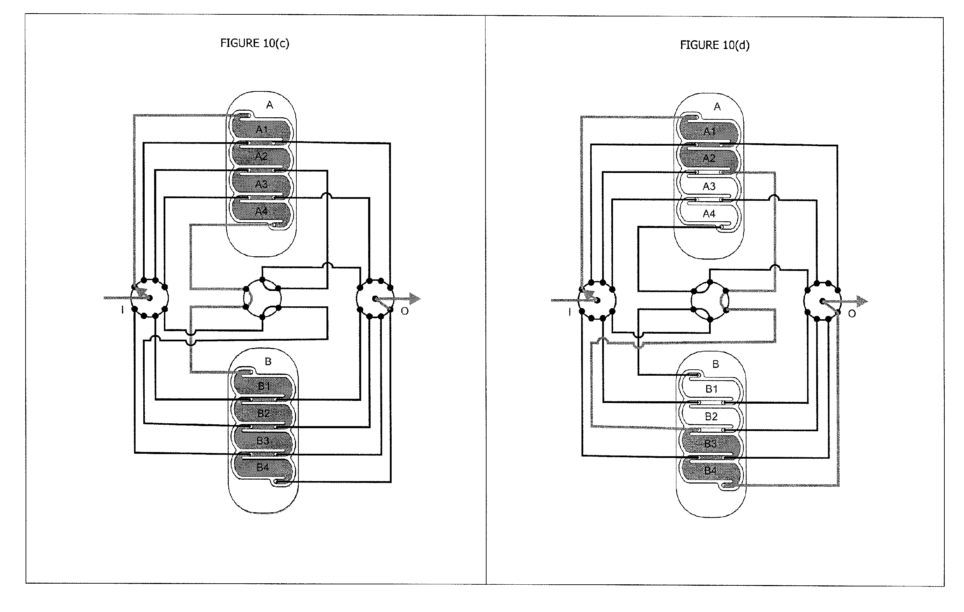

FIGURE 10 depicts another embodiment of the invention: comprising two flow-cells A and B (each, generally as depicted in FIGURE 2) and with one 3x2 switching valve (111) connectable according to another embodiment of the invention. FIGURE 10(a) shows selection valve (I), selection valve (O) and switching valve (111) set to "fill/flush" sample liquid through the sample regions of flow-cell A. FIGURE 10(b) shows selection valve (I) and selection valve (O) being set to "fill/flush" sample liquid through the sample regions of flow-cell B. FIGURE 10(c) shows selection valve (I), selection valve (O) and switching valve (111) set to expose sample liquid to all sample regions A1 to B4. FIGURE 10(d) shows switching valve (111) set to expose sample liquid to sample regions A1, A2, B3 and B4.

The present invention, and particular non-limiting aspects and/or embodiments thereof, can be generally described as follows:

In a first aspect, the invention relates to **a microfluidic device** for liquids comprising (with reference to FIGURE 1):
- A plurality of sample regions (1a .. 1 n) connectable in serial liquid continuity via one or more connection channels (2a .. 2m); and
- A first (input) selection valve (3) with a sample input (4) and plurality of outputs (5a .. 5x), each valve output connectable to an input (6) for a sample region via a liquid channel (7); and
- A second (output) selection valve (8) with a sample output (9) and a plurality of inputs (10a ..10y), each valve input connectable to an output (11) for a sample region via a liquid channel (12).

Such a microfluidic device can provide greater flexibility in the provision of liquid-paths, providing various routes by which sample liquid can flow, exposing various individual sample regions (or subsets of adjacent sample regions) based on the settings of the first (input) selection valve and of the second (output) selection valve. For example, with the settings shown in FIGURE 1, sample liquid introduced into input (4) of selection valve (3) is exposed only to sample regions (1b) and (1...). Without being bound by theory, it is believed that the incompressibility of liquid present in the other sample regions and liquid connections (or if empty, capillary action of the liquid at junctions, and the limited compressibility of gases, effectively providing a "stop-flow" junction) prevents the sample liquid from passing into other sample regions. If the second (output) selection valve (8) is then set to port (10b), the sample liquid is thereby only exposed to sample region (1b). Alternatively, if the first (input) selection valve (3) is set to port (5a) and the second (output) selection valve (8) is set to port (10y), the sample liquid can pass through and be exposed to the total plurality of sample regions (1 a) to (1 n). This flexibility can be utilised for example, to prepare a plurality of sensor regions (such as SAW sensor regions) to detect the same analyte (by exposing all sensor regions with a common sample liquid used for such preparation by using valve-settings (5a) and (10y)) and then testing individual sample liquids for the presence of such analyte by exposing each sample liquid to one sensor region in turn by appropriate settings of selection valves (3) and (8). Alternatively, the flexibility of a microfluidic device of the present invention can be utilised in the other perspective for example, to prepare a plurality of sensor regions (such as SAW sensors) each to detect a different analyte (by exposing each sensor region in turn, using specific valve-settings, to specific sample liquids used to prepare a given sensor region to detect a given analyte) and then testing a single common sample liquid for the presence of all the different analytes (by exposing all sensor regions with the sample liquid by using valve-settings (5a) and (10y)).

The invention provides not only a microfluidic device that is more flexible as described above, it provides economic savings; for example in terms of the volume/consumption of sample liquid or other reagents needed, should only one or a small number of sample regions be required for a particular process. The unused sample regions can be excluded from the liquid-path, thus saving the total amount of sample liquid (or other liquid reagents) needed. Correspondingly, by not exposing unneeded sample regions (such as expensive biosensors) to sample liquid, they may be used in other processes, and hence also provide economic advantages. In yet other regards, the invention provides advantages over the prior art. For example, with appropriate settings of the two selection valves, undesired liquids (for example those used or left over from an earlier process) can be flushed and fresh liquid filled into individual sample regions without passing it into other sample regions, despite them being in serial liquid continuity via connection channels (2a) to (2m). In addition, should a bubble, void or other obstacle be present in one sample region, it can be simply "flushed" from one sample region to waste without entry into another sample region.

In certain embodiments, the device of the invention is for (such as is useful for or is specifically adapted for) liquids having a lower pressure than those found in HLPC. For example, such a device may be used with liquids having a pressure of less than about 500 KPa, such as liquids having a pressure of between 10 and 500 KPa. In alterative embodiments, the device is not for (such as is not useful for or not specifically adapted for) liquids having a pressure of greater than about 1, 2, 5, 10, 50 or 100 KPa.

The microfluidic device of the invention may be used for any number of different types of liquids. For example, the liquid may be hydrophilic or it may be hydrophobic. Suitable liquids for use in the microfluidic device include aqueous liquids, such as solutions of analytes in water. Suitable liquids may alternatively be mixtures of different kinds of liquids, such as mixtures of aqueous liquids (or solutions thereof), mixtures of organic solvents (or solutions thereof), emulsions of hydrophilic and hydrophobic liquids or suspensions in hydrophilic or hydrophobic liquids. In a particular embodiment, the liquid is an aqueous liquid comprising analytes selected from one or more of the group of: proteins, peptides, small-molecules, sugars, carbohydrates and glycoproteins, nucleic acids, cells, cell-fragments, lipids, vesicles, membranes and membrane fragments, cell-extracts, food-extracts, drugs/drug-metabolites and explosives, as well as mixtures and/or compositions thereof.

Components of the microfluidic device of the invention that are "connectable" may be directly connected (as shown in FIGURE 1), or may have additional valves (such as selection, shut-off or switching valves, as show in figures 5 to 10), that redirect liquid flow for example to specify one, from a set of at least one, such as two, possible inputs for, or outputs from, a sample region to which the selection valve is connected to. In particular embodiments, such connectable components are connected via, through or otherwise using the applicable valve that provides the connectability and/or the resulting fluid connectivity.

As will be appreciated by the person of ordinary skill, the selection valves of the inventive device may be provided by any suitable valve assembly, such as one that can provide selective liquid flow from at least one (common) port selectively to (or from) a number of other ports. A preferred type of selection valve is a rotary selection valve such as those made by Rheodyne or Vici. In alterative embodiments, a suitable valve assembly that provides an analogous function is a manifold (ie, a common input port dividing into multiple output ports) with shut-off, isolation or stop - valves on one or more (preferably on all) output ports of the manifold. Such manifold/shut-off valve based selection valves may have particularly utilities in certain devices of the invention, for example those requiring high fluid throughput or yet higher speed analysis.

The microfluidic device of the invention comprises one or more connection channels between two adjacent sample regions. In certain embodiments, at least one of such connection channels between adjacent sample regions (in the same subunit) directly connect said pair of sample regions. For example, such connection channel does not comprise a shut-off, isolation or stop -valve.

In other certain embodiments of the microfluidic device of the invention, each sample region has an input connectable to a specific output of the first (input) selection valve; and/or each sample region has an output connectable to a specific input of the second (output) selection valve. In such embodiments, the various components can be arranged such that (ie, that the inputs/outputs and configuration of the valves are arranged, eg are connected in a manner, such that) liquid can flow either: (a) via any single sample region; or (b) via at least two sample regions (up to all of the sample regions), wherein said flow depends on at least the setting of the first (input) valve and/or of the second (output) selection valve.

In alternative embodiments of the device, not every sample region has an input (and/or output) that is connectable to a specific output (or input) of the respective selection valve. For example, and as shown in FIGURE 1(c), subsets of two sample regions have such inputs and outputs, such that fluid may be addressed and exposed to pairs of sample regions.

The microfluidic device of the invention may include a first (input) selection value and/or a second (output) selection value that comprises at least one output or input, respectively, that is not connectable to a sample region. Such non-connectable port can facilitate the flushing, washing and/or passing to waste of liquid through the respective selection valve and associated portion of the device without passing through any sample region.

The microfluidic device of the invention may also further comprise a liquid drive source. Preferably said liquid drive source is disposed upstream of the first (input) selection valve. Any suitable drive source may be used for the liquid, including positive displacement pumps or velocity pumps. In a preferred such embodiment, such a liquid drive source is a syringe pump. Other suitable liquid drive sources include peristaltic pumps or piezoactuated pumps. The inclusion of a liquid drive source can aid and control the flow and processing of liquid through the microfluidic device of the invention.

In particular embodiments of the microfluidic device, the sample region comprises a sensor region, a sample coil, a reaction chamber, a container or a separation column. Preferably the microfluidic device of the invention includes at least one sample region (such as a plurality of or all sample regions) that comprises a sensor region such as a biosensor, and/or where such sensor region is (or all sensor regions are) selected from the group consisting of: an SPR sensor; an electrochemical sensor; an optical sensor, such as a fluorescence sensor or a luminescence sensor; and an acoustic sensor such as a QCM sensor or a SAW sensor. Most preferably, each sample region in the microfluidic device comprises a SAW sensor.

In particular embodiments, at least one biosensor (such as a SAW senor) of the device is adapted to allow detection moieties to bind to the surface of such sensor, or has detection moieties bound to it. Preferably said detection moieties are selected from the group of: antibodies; nucleic acids, such as DNA, RNA, or PNA; proteins; peptides; aptamers; cells; charged molecules; membranes; vesicles; chemical or electrochemical receptors; and, most preferably, monoclonal antibodies. Methods to adapt a sensor region, and to bind such detection moieties are well known in the art to the skilled person and include those described by Gronewold ("Aptamers and Biosensors", in "Nucleic Acid and Peptide Aptamer", Ed Mayer, Humana Press, New York).

In other particular embodiments, at least one of the sample regions (preferably all) of the device comprises a SAW sensor. Preferably the SAW sensor has a surface area selected from the group of about: 20 mm²; 10mm²; 7.5 mm²; 5 mm²; 2.5 mm²; 2 mm²; 1 mm²; or preferably, between about 4 mm² and 8 mm² such as about 6.0 mm² or 6.8 mm².

In yet further embodiments, the microfluidic device of the invention is characterised by one or more of the following:
- for at least one adjacent pair of sample regions (preferably for all such pairs), the output for the first sample region is separated from the input for the second sample region by a connection channel (eg, (2a) in FIGURE 1) that: (a) has a volume between about 0.01 µl and about 100µl, such as a volume selected from the group of about: 0.02, 0.04, 0.05, 0.1, 0.25, 0.5, 1, 10, 20 and 50µl, preferably about 0.04µl; and/or (b) has a cross-sectional area between about 0.01 mm² and 5mm², such as an area selected from the group of about: 0.02, 0.04, 0.05, 0.1, 0.25, 0.5, 1 and 3mm², preferably about 0.04mm²; and/or
- for at least one liquid channel (eg, (7) in FIGURE 1) (preferably for all such channels): (i) the liquid volume of such liquid channel is between about 1 and about 200µl, such as a volume selected from the group of about: 2, 4, 5, 10, 15, 20, 50 and 100µl, preferably about 7µl; and/or (ii) the cross-sectional area of said liquid channel is between about 0.005 and about 5mm², such as an area selected from the group of about: 0.01, 0.02, 0.04, 0.05, 0.1, 0.25, 0.5 and 1mm², preferably about 0.012mm²; and/or
- for at least one sample region (eg, (1a) in FIGURE 1) (preferably for all sample regions): (x) the cross-sectional area of the channel over said sample region is between about 0.1mm² and about 3mm², such as an area selected from the group of about:0.2, 0.3, 0.4, 0.5, 0,75, 1 and 2mm²;and, preferably, about 0.3mm²; and/or (y) the liquid volume of each said sensor region is between about 0.25µl and about 30µl, such as a volume selected from the group of about: 0.5, 1.0, 1.25, 1.5, 1.75, 2.0, 5, 10, 15 and 20µl, preferably about 3.0µl; and/or
- the total liquid volume of at least one fluidic subunit of the microfluidic device is between about 3µl and about 500µl, such as a volume selected from the group of about: 5, 10, 15, 20, 50, 100, 150, 250 and 400µl, preferably about 13µl, wherein "fluidic subunit" in this context means such portion of the device from the output of the first (input) selection valve through two adjacent sample regions and their associated connection channel, but not including any output from the second sample region or liquid channels to the second (output) selection valve (eg, the total aggregate volume of (7), (1a), (2a) and (1b) in FIGURE 1).

In certain embodiments of the invention: the aspect ratio of the cross-section of at least one connection channel is between about 1:0.1 to about 1:10, such as an aspect ratio selected from the group of 1:0.5, 1:0.75, 1:1, 1:1.5 and 1:2; and/or the aspect ratio of the cross-section of the channel above at least one sample region is selected from the group of aspect ratio of width to vertical dimension at approximately the middle of the sample region, that is selected from the group of about: 2:1; 5:1; 7.5:1; 10:1; 15:1; 20:1; and, preferably, about 10.5:1 or 7.5:1. In a preferred such embodiment, a channel over a sample region has a cross-section with a vertical dimension that is larger at one position across the channel than at another, preferably a vertical dimension that is larger at approximately the middle than at the sides of the channel, such as wherein said channel has a house-shaped cross-section (such as one disclosed in co-pending patent application EP10171508.4).

The connections for each of the inputs into and/or out of a sample region may be provided and arranged in any suitable manner. For example, (and with reference to FIGURE 1(a)) for at least one sample region (preferably at least two, most preferably all sample regions), an associated connection channel and an input for such sample region (or an output for such sample region) are in liquid continuity via a T-connection (13); and/or (and with reference to FIGURE 1b) for at least one sample region (preferably at least two, most preferably all sample regions), an associated connection channel and an input for such sample region (or an output for such sample region) are in liquid continuity via separate connections to such sample region for each of the connection channel (14a) and the input for a sample region (or the output for a sample region) (14b).

In a particular embodiment of the microfluidic device of the invention, for at least two sample regions (preferably all sample regions), their associated inputs and outputs are in liquid continuity via separate connections to their respective sample region. For example, inputs and outputs (214i/o) and (314i/o), respectively, with reference to FIGUREs 2 and 3; and/or at least one sample region (preferably at least two, most preferably all sample regions) comprises, and/or is at least partially formed by, a separable subunit of the microfluidic device; and/or at least two sample regions and their associated connecting channel(s) together comprise a flow-cell. Preferably such flow-cell comprises flow boundaries as represented generally by those shown by (21) or (31) in FIGUREs 2 and 3, respectively, and/or comprises associated inputs and outputs arranged generally as shown in such respective figure.

In a further preferred embodiment, the microfluidic device of the invention includes at least two sample regions and their associated connecting channel(s) that together comprise a flow-cell; and said flow-cell comprises a separable subunit of the microfluidic device adapted to form said sample regions and their associated connecting channel(s) (for example, such as (22) and (32) as generally represented in figures 2 and 3, respectively) when brought into contact with another subunit of the microfluidic device. In a particularly preferred such embodiment, such other subunit of the microfluidic device is a sensor surface, such as one comprising at least two SAW sensors such that, when brought into contact, each sample regions of the flow cells comprises a SAW sensor.

In particular embodiments of all aspect of the present invention that comprise a flow-cell, said flow-cell can be adapted to allow liquids to be introduced into the vicinity of the sample region (such as a SAW sensor). The design, orientation and/or size of the flow-cell may be adapted to facilitate such introduction in advantageous ways such as reduction of the volume of liquid comprising analyte liquid, or reduction of the likelihood of introduction or retention of bubbles or other obstacles in the vicinity of the sensing surface. The flow cell, when comprised in the present invention may be one which is preferably adapted for the determination of kinetic rate parameters of the studied interactions. The flow cell may be made of biologically compatible material, preferably selected from, but not limited to, polyoxymethylene, polymethylmethacrylate, polyvinyl chloride and injection-moldable thermoplastics, such as polystyrene or acrylonitrile-butadienestyrene, and/or may be made of a flexible and/or (reasonable) transparent material such as a silicone. Such material can provide that the flow-cell is reasonable transparent such that an obstacle present in the flow cell can be visually detected or recognised. As will be known to the person of ordinary skill, flexible silicone flow-cells may be formed using silicone-rubber such as by using 2-part silicone elastomer kits obtainable from a variety of suppliers such as Dow Corning, Wacker Chemie or Quantum Silicones. The dimensions of the flow cell may be suitable for determination of kinetic rate parameters for molecular interactions, i.e. in such embodiments the flow characteristics should allow for maintenance of the bulk solution concentration of the analyte ligand at, or very close to, the sensing surface. In certain embodiments, the flow-cell is one generally as, or preferably one specifically as, disclosed in W02009/153189 co-pending EP10171508.4 or Community Designs 001789785-0001 to -0009.

In preferred embodiments of all aspects of the invention, the flow-cell comprises flow boundaries and/or connection channel(s) that are able to form a serpentine flow-path of sample liquid across the plurality of sample regions (such as SAW sensors), and/or provide for such sample regions to be positioned in a tiled row where two sample regions being in serial fluid continuity are physically proximal to each other (such as parallel to each other), for example as depicted by the flow cells represented in the figures herein. Such an arrangement and design of the flow-cell has particular advantages in respect of chip-based sensors, such as where said plurality of sample regions are SAW sensors, comprised as a row or array on a single chip. Further, the fluid input/output for a given sample region may be present at the respective ends of a sample region (such as depicted in FIGURE 3), or may be present within the connection channel(s) forming part of the flow-cell (such as depicted in FIGURE 2). In certain embodiments, the flow-cell provides for sample regions that have a larger cross-section area (such as by being wider) across said sample regions (such as SAW sensors) than that of the connection channel(s). For example, the cross-sectional area and/or width across the sample region is between about 2 to about 10 times larger, such as about 3, 4, 5 or 7 times larger, than that of the connection channel. In a related embodiment, the path-length of the fluid flow across the sample regions (such as a SAW sensor) provided by a flow-cell is between about 1.5 and about 10 times, such between about 2, 3, 5 or 7 times longer, than the width of the fluid flow across said sample region. In other embodiments, the flow-cell comprises a vertical dimension that is taller at one position across the channel than at another; preferably a vertical dimension that is taller at approximately the middle than at the sides of the channel, such as wherein said channel has a house-roof shape with a ridge, as described in more detail in co-pending EP10171508.4.

As described above, microfluidic devices comprised of separate portions or subunits, while advantageous for scalability in design, construction and maintenance, can be susceptible to increased problems of filling/flushing of liquid so as to minimise the passing of undesired fluids (including bubbles/voids of gas or other liquids) from one subunit of the device to another. The present invention can therefore be especially suitable for those microfluidic devices comprised of separable subunits, such as comprising separate or separable flow-cells and sensor surfaces, where such subunits are interconnected to form a multi-channel microfluidic device, as it enables the selective addressing, exposure and or fill/flush of individual of sub-sets of sample regions. In such embodiments, a portion or subunit of the device can be separated - for maintenance, cleaning or set-up - which can lead to a loss of liquid, drying of such portion or subunit, and/or introduction of gas (such as air), bubbles or voids. Accordingly, in certain embodiments the microfluidic device of the invention is a multi-channel device that comprises a number of sample regions selected from the group consisting of: 2, 3, 4, 5, 6, 7, 8, 9, 12, 15, 16, 18, 24, 25, 48, 96, between 10 and 19, between 20 and 29, between 30 and 49 and between 50 and 100; and/or the total plurality of sample regions is provided by two or more separate flow-cells (each flow-cell comprising a sub-set of the sample regions), wherein the separate flow-cells may be connectable via interlinking connection channels, such as represented by (41) in FIGURE 4a.

In particular embodiments a flow-cell that may be present in the microfluidic device of the invention comprises a number of sample regions selected from the group of 2, 3, 4, 5, 6, 7, 8, 9, 10, 11 and 12. Preferably a microfluidic device comprises between 2 and about 5 of such flow-cells; and/or preferably wherein said flow-cell the microfluidic device comprises the liquid continuities as represented generally by FIGUREs 4. As will now be appreciated by the person of ordinary skill, although FIGUREs 4 features the flow-cells as first shown in FIGURE 2 (and in other embodiments) (and having the flow-boundaries (21)), analogous liquid continuities to those in FIGUREs 4 can be achieved using a flow-cell having flow-boundaries similar in arrangement as those shown by (31) in FIGURE 3. Accordingly, in a particular embodiment, the microfluidic device of the invention comprises the liquid continuities as represented generally by FIGUREs 4, and comprises at least two flow-cells, each comprising flow-boundaries as generally represented by (31) in FIGURE 3. As shown in FIGURE 4(a), the input (I) and output (O) selection valves are set such that sample liquid is exposed to sample regions A3, A4 and, via interlinking connection channel (41), to B1 and B2. In FIGURE 4(b) the output selection valve (O) is set such that sample liquid is exposed only the sample regions A3 and A4, with the sample liquid passing from the output of A4 directly to the output valve (O) and not through the interlinking connection channel (41) into flow-cell B.

As described above, during certain applications of particular embodiments of the device of the present invention (such as that represented by FIGUREs 4), upon separation/removal of flow-cell A (for example to change a sensor region in anticipation of a new application/experiment, or to clean or conduct other inspection or maintenance work), the insides of the flow-cell/sample region may become dry/drier and/or air, bubbles or other voids may be introduced into the system. Reintroduction of liquid into the then reassembled/reinserted flow-cell A may then cause air or one or more bubbles, or a mixture of liquid (that may have been retained in the interlinking connecting channel (41)) and air (from flow-cell A), to be introduced into flow-cell B. This may lead to uncontrolled wetting of flow-cell B and/or of a sample region (such as a SAW sensor) comprised therein. Uncontrolled wetting may lead to retention of air-bubbles (or other obstacles) leading to unreliable, inaccurate and/or (at least partially) non-functional sample regions (for example as is described in co-pending European patent application number EP10171508.4). Accordingly, in certain embodiments of the microfluidic device of the present invention, at least one switching valve is also present in the liquid continuity of said device. In certain of such embodiments said switching valve is configured such that one or more sample regions can be filled and/or flushed with liquid, such that any undesired liquid/air may be passed to the output of the device and not into any other sample region. While such additional feature has particular advantages in those embodiments of the present invention that comprise separable flow-cells, it will now be apparent to the person of ordinary skill that such "fill/flush" feature provided by the switching valve may have utility in other embodiments of the device. Accordingly, and with reference to FIGUREs 5 (being a simplified representation of the corresponding liquid-continuity shown in FIGUREs 6), as liquid is passed into subunit A (for example after it being opened and reassembled) having switching valve (51) in the setting shown in FIGURE 5(a), any remaining/undesired liquid or air from sample regions of subunit A is expelled to waste via the port (iii) to the (output) selection valve (O). Accordingly, such remaining/undesired liquid or air is not introduced into the sample regions of subunit B. Thereafter, once the sample regions and liquid channels in subunit A have been appropriately filled, flushed or otherwise prepared with liquid, the switching valve (51) can be set to the position shown in FIGURE 5(b), which then provides liquid continuity from the output of the last sample region of subunit A to the input of the first sample region of subunit B. Furthermore, as will be seen from the setting of the switching valve (51) in FIGURE 5(a), each of the individual sample regions in subunits A or B can be addressed, or all the subunit B can be filled/flushed with liquid without affecting the functionality of subunit A. Accordingly, the inclusion of a switching valve provides the additional functionality of "fill/flush" without affecting the flexibility of each sample region (or sets of adjacent sample regions) from being addressed by appropriate settings of the first (input) selection valve (I) and the second (output) selection valve (O), and their exposure to sample liquid.

Therefore, a particular embodiment of the microfluidic device of the invention further comprises (and with preference to FIGUREs 5) at least one switching valve (51) connectable to at least: (i) an output of a first sample region (52); (ii) an input for a second sample region (53); and (iii) an input for the second (output) selection valve (54); such that (ie, that the inputs/outputs and configuration of the valve are arranged, eg connected in a manner, such that) liquid-flow from the output of the first sample region can be switched either to the input for the second sample region or to the input for the second (output) selection valve; and, preferably, wherein said switching valve is further connected to (iv) an output of the first (input) selection valve (55); such that liquid-flow for input into said second sample region can be switched from said output of the first (input) selection valve or from said output of said first sample region. Preferably the microfluidic device of such an embodiment comprises the liquid continuities as represented generally by FIGUREs 5 or FIGUREs 6; and/or preferably wherein the microfluidic device comprises at least two flow cells, each comprising flow-boundaries as generally represented by (21) in FIGURE 2 or by (31) in FIGURE 3.

As will now be appreciated by the person of ordinary skill following the disclosure of the present invention, in figures 5 and 6 the switching valve is represented as a four-port 2x2 switching valve (also known as an "injection valve"), but analogous functionality may be achieved by using, for example, a six-port 3x2 switching valve, but only using two pairs of ports, so that such nx2 switching valve functions as a 2x2 switching valve. Indeed, as six-port 3x2 switching valves are often more readily available and of lower cost, the use of, such a valve within the various applicable embodiments of the invention is especially envisioned.

In both figures 5 and 6, when the switching valve is in the "fill/flush" position - FIGURE 5(a) and FIGURE 6(b), respectively - liquid-flow from the first set of sample regions (marked as flow-cell "A" in both figures) is passed to the second (output) selection valve (O) of the device and not to the input for a sample region in flow-cell B. In the alternative position of the switching vale - FIGURE 5(b) and FIGURE 6(a), respectively - the liquid-flow from the output of one sample region (in this case the last sample region) of the first set of sample regions (A) passes not to the second (output) selection valve (O) but to the input of another sample region (in this case the first sample region) of the second set of sample regions (B), via the interlinking connection channels (52) and (53), providing the serial liquid continuity of the plurality of sample regions.

In the specific embodiments shown in FIGUREs 5 (and the corresponding liquid-continuity shown in FIGUREs 6), said first and second sample regions are adjacent and represent, respectively, the last sample region in flow-cell A and the first sample region in flow-cell B. Accordingly, in once embodiment of the microfluidic device of the invention, said first sample region is adjacent to said second sample region, for example said first sample region is the last sample region of a first flow-cell, and said second sample region is the initial (ie the first) sample region of a second (for example, adjacent) flow-cell.

In alternative embodiments of the microfluidic device of the invention however, the switching valve is arranged such that the output of said "first" sample region is connectable to the input of a non-adjacent "second" sample region, via bridging connectors. Accordingly, and with reference to FIGUREs 7 (being a simplified representation of the corresponding liquid-continuity shown in FIGUREs 8), the sample regions that are connected to ports (i) and (ii) of the switching valve (71) are from non-adjacent sample regions from subunit A and B. Such an arrangement of the switching valve (71), together with the interlinking connection channel (74) provide yet increased flexibility to the possible arrangements of sample regions that can be exposed with sample liquid, and in particular enables non-adjacent sample regions to be exposed to sample liquid. For example, when switching valve (71) is set as shown in FIGURE 7(a), sample liquid cannot pass through bridging channel (72a) into (72b), yet all individual sample regions (or adjacent pairs thereof) can be address by appropriate settings of input selection valve (I) and output selection valve (O), provides effectively the same flexibility as that provided by the embodiment shown in FIGURE 1. However, upon setting the selection valve to that shown in FIGURE 7(b), liquid can now pass through the bridging channels, providing exposure of non-adjacent sample regions to sample liquid.

FIGUREs 8(a) to 8(d) show a number of the various possible patterns by which sample liquid can be exposed to one or more sample regions by applicable settings of the two selection valves and the switching valve, including the exposure on non-adjacent sample regions as shown in FIGUREs 8(b) and 8(d). Following this disclosure, the person of ordinary skill will now be readily able to envision the various other exposure patterns possible with this embodiment, and also how it may be extended by addition of further sample regions, flow-cells and/or switching valves.

Therefore, a particular embodiment of the microfluidic device of the invention further comprises (and with preference to FIGUREs 7) at least one switching valve (71) connectable to at least: (i) an output of a first sample region; (ii) an input for a second sample region; (iii) an input for the second (output) selection valve (73); and wherein said first sample region is non-adjacent to said second sample regions and are connectable to switching valve (71) via bridging connectors (72); such that (ie, that the inputs/outputs and configuration of the valve are arranged that) liquid-flow from the output from the first sample region (72a) can be switched either to the input for the non-adjacent (second) sample region (72b) or to the input for the second (output) selection valve (73). In such embodiments, the serial liquid continuity of the plurality of sample regions is provided by interlinking channel (74).

As described above, such a configuration of the switching valve and bridging connectors of this embodiment of the present invention provides certain advantages to the utility of the microfluidic device. For example, the flexibility of the device can be greatly increased in that liquid samples can then be exposed to sample regions that do not need to be (directly) adjacent to one another, particularly as the total number of sample regions increases and/or uses (two or more) subunits of sample regions. Accordingly, certain such embodiments of the device of the present invention, comprise a first plurality of sample regions, a second plurality of sample regions, said switching valve and said bridging channels; wherein said components are in liquid continuity, such that (ie, that the inputs/outputs and configuration of the valve are arranged, eg connected in manner, such that) depending on the setting of said switching valve, liquid can: pass through the last sample region of the first plurality of sample regions to the initial sample region of the second plurality of sample regions; or pass via bridging channels from an intermediate (first) sample region of the first plurality of sample regions to a (second) sample region of the second plurality of sample regions, wherein said (second) sample region is non-adjacent to said intermediate (first) sample region. Preferably, said embodiment of the microfluidic device comprises the fluid continuities as represented generally by FIGUREs 7 or FIGUREs 8; and/or preferably wherein said microfluidic device comprises at least two flow cells, each flow-cell comprising flow-boundaries as generally represented by (21) in FIGURE 2 or by (31) in FIGURE 3.

As will now be apparent to the person of ordinary skill, depending on the relative positions of the non-adjacent sample regions in this embodiment of the invention, different patterns of exposure of sample liquid to the plurality of sample regions will be possible, and such relative positioning may be designed to achieve more preferable or desired such patterns. Accordingly, in certain embodiments the microfluidic device of the present invention comprises a first and/or second plurality (N) of sample regions where N is selected from the group of: 2, 3, 4, 5, 6, 7, 8, 9, 10, 11 and 12; wherein a bridging channel connects said selection valve to an intermediate sample region positioned at position N-1 or lower. Preferably, N in this embodiment is selected from the group of 2, 4, 6 and 8, and wherein N-1 is selected, respectively, from the group of 1, 2, 3 and 4.

As described above, two distinct functionalities of the switching valves are encompassed within the present invention - "fill/flush" and "bridge" - with both of these two functionalities providing advantages or utilities to the device of the present invention, including those described herein, such as flexibility and ease of use. In particular embodiments of the present invention, these two functionalities may be combined in the same device to provide a microfluidic device with a combined set of advantages; that is, a device that permits "fill/flush" as well as the addressing of and exposure of sample liquid to non-adjacent sample regions.

Accordingly (and with reference to FIGUREs 9), in certain embodiments the microfluidic device of the invention further comprises a second switching valve, wherein:
- the (first) switching valve (91) is arranged to switch liquid-flow from the output of a first sample region (90) to either the second (output) selection valve (92) or to the input for a second sample region (94) that is adjacent to said first sample region; and
- said second switching valve (93) is arranged to switch liquid-flow from the output of an intermediate (first) sample region (95) to either the second (output) selection valve (92) or to an input of a non-adjacent (second) sample region (96);
   - preferably, each switching valve is further connected to at least an output of the first (input) selection valve (97a/b); such that (ie, that the inputs/outputs and configuration of the valves are arranged that) liquid-flow for input into the respective second sample region can be switched from either said output of the first (input) selection valve or from said output of the respective first sample region.

Preferably the microfluidic device of this embodiment comprises the liquid continuities as represented generally by FIGUREs 9; and/or preferably wherein said microfluidic device comprises at least two flow-cells, each comprising flow-boundaries as generally represented by (21) in FIGURE 2 or by (31) in FIGURE 3.

The combination of "fill/flush" and "bridge" functionalities provide particular synergistic advantages to those microfluidic such devices of the present invention that comprise such a combination. For example, by inspection of FIGURE 8 it will be apparent that when the selection valve is in the "bridge" setting (such as shown in FIGURE 8(b)), there remains the possibility of a parallel liquid-flow through the Z-shaped interlinking connection channel (81) as well as through the bridging connections (82a/b) via selection valve (83). Depending on the relative liquid flow-resistances of these two liquid paths (via (81) or via (82a/b)), under certain conditions such parallel liquid-flow through (81) may not be insignificant (alternatively, under other conditions such parallel liquid-flow may be insignificant and hence embodiments such as those represented by FIGUREs 8 retain their utility). In comparison, inspection of a corresponding liquid-path in an embodiment of the device having both "fill/flush" and "bridge" functionalities (FIGUREs 9), shows that with an appropriate setting of the "fill/flush" selection valve (91) (eg set as shown in FIGURE 9(b)), there is no possibility of parallel liquid flow through the connection channels that interlinks the two flow-cells (98a/b), and hence the "bridging" functionality provided by switching valve (93) is thereby synergistically enhanced in such embodiments through the functionality provided by the "fill/flush" switching valve (91 The person of ordinary skill will now recognise the various patterns of sample liquid exposure to sample regions that can be achieved (including of non-adjacent sample regions) by applicable settings of the two selection valves (input (I) and output (O) selection valve) and the two switching valves (fill/flush (91) and bridge (93) switching valve), as well as how either flow-cell A or B may be filled, flushed or prepared for use by appropriate setting of the same four valves.

As described above, any switching valve shown here in the figures as 2x2 valves may be any suitable multiple port switching valve (also known as an "injection valve") such as nx2 switching valves and 3x2 switching valves in particular.

In the embodiment described above (and generally represented in FIGUREs 9), the "fill/flush" and "bridge" functionalities are provided by two separate switching valves (91) and (93); in these cases using two four-port 2x2 switching (injection) valves. In an alternative embodiment of the microfluidic device of the present invention, such "fill/flush" and "bridge" functionalities may be combined into a single switching valve having greater than 2x2 switching capability (for example, a 3x2 switching valve). Accordingly (and with reference to FIGUREs 10), in certain embodiments the microfluidic device comprises a selection valve (111) connectable to at least: (i) an output of a first sample region (117); (ii) an input for a second sample region (115); (iii) an input for the second (output) selection valve (114); such that (ie, that the inputs/outputs and configuration of the valve are arranged to provide) liquid-flow from the output of the first sample region can be switched either to the input for the second sample region or to the input for the second (output) selection valve; and, preferably, wherein said switching valve is further connected to (iv) an output of the first (input) selection valve (116); such that liquid-flow for input into said second sample region can be switched from said output to the first (input) selection valve or from said output of said sample region. In such embodiment however, said selection valve is further connectable to at least: (v) an output of a third sample region (112); and (vi) an input for a fourth sample region (113); and wherein said first and second sample regions are adjacent to each other, and said third and fourth sample regions are non-adjacent to each other; such that (ie, that the inputs/outputs and configuration of the valve are arranged that): liquid-flow from the output of the third sample region (112) can be switched either to the input for the fourth (non-adjacent) sample region (113) or to the input for the second (output) selection valve (114); and liquid-flow for input into said second sample region (115) can be switched either from said output of the first (input) selection valve (116) or from said output of said first (adjacent) sample region (117); and liquid-flow for input into said fourth sample region (113) can be switched either from said output of said first (input) selection valve (116) or from said output of said third (non-adjacent) sample region (112). Preferably wherein said microfluidic device comprises the liquid continuities as represented generally by FIGUREs 10; and/or preferably wherein said microfluidic device comprises at least two flow-cells, each comprising flow-boundaries as generally represented by (21) in FIGURE 2 or by (31) in FIGURE 3.

As will be appreciated by the person of ordinary skill from inspection of FIGURE 10(a), each output of the first (input) selection value (116) is "connectable" to an input for a sample region, despite that certain specific selection valve outputs shown are possibly "connectable" to two such sample region inputs, where the specific sample region is selected or addressed by the setting of the switching valve (111). Correspondingly, each input for the second (output) selection valve (114) is also "connectable" to an output of a sample region, for specific inputs, depending on the setting of the switching valve (111). In FIGURE 10(a), the two selection valves, despite having 8-ports indicated in the figures, comprise only 7 outputs (or inputs), as the 8th port is not used in the embodiment shown. In other embodiments however, such port may be used as an output (or input) to provide a waste, wash or flush functionality.

As will now be appreciated by the person of ordinary skill, in any of the embodiments of the invention, a selection valve may be utilised that comprises more ports than actually utilised for the liquid-continuities of the microfluidic device. Furthermore, any of the embodiments of the microfluidic device of the invention may be further scaled, enlarged or extended, by the addition of additional sample regions, subunits of flow-cells, and the associated valves and fluid channels.

In particular embodiments, the microfluidic device of the invention further comprises at least one sensor, feature, adaptation or other means to control and/or check the setting of the first (input) selection, the second (output) selection and/or, if provided, at least one switching valve. Preferably, said means makes a control and/or check of the position of all valves of the device; and/or preferably wherein said means makes a control and/or check of the activity of a liquid drive source, if present in the device.

Such control/checking means has particular utility, for example in embodiments of the microfluidic device of the invention comprising one, two or more switching valve(s). For example, in certain combinations of the various valve settings in such embodiments, any liquid introduced into the (common) input of the device (such as the input to the first (input) selection valve) device may not have a continuous and free flow out of the (common) output of the device (such as the output from the second (output) selection valve). Accordingly, such combinations of settings may be damaging to the device (or even potentially dangerous to the user), and hence such combinations of settings should, preferably, be avoided, particularly if said liquid is actively introduced (eg under pressure) with a liquid drive source such as a by using a pump. Suitable control and checking means (such as by use of a programmable logic controller or PC with an appropriate program and/or electro-mechanical valves, for example those driven by solenoids or by stepper- or servomotors) will be known to the person of ordinary skill. With an appropriate control means (typically, a specific computer program that controls the settings of the various valves, but does not allow certain potentially damaging or "dead-end" combinations of valve settings), only those settings that provide a continuous and free flow of liquid into and out of the device may be permitted by said control/checking means. In an alternative embodiment of the device of the invention that does not comprise said means to control and/or check, the user may control and/or check the setting of such valve(s) before introducing liquid into the device.

In other embodiments, the microfluidic device of the invention further comprises one or more features disclosed in co-pending patent application EP10171508.4. For example, said device may comprise: (a) a sensor surface, that when mounted for operation, is orientated at an angle between, but not equal to, horizontal and vertical, and preferably wherein the fluid-port for providing said sample-fluid is located lower than the fluid-port for removing said sample-fluid from the sensing surface, such that the direction of flow of the sample-fluid is generally upwards; (b) a channel over a sample region has a cross-section with a vertical dimension that is larger at one position across the channel than at another, preferably a vertical dimension that is larger at approximately the middle than at the sides of the channel, such as wherein said channel has a house-shaped cross-section; and/or (c) a portion of the device that covers a sensing surface is sufficiently transparent so as to visually detect a bubble or other obstacle retained in the sensor, such as in said channel or on said sensing surface, preferably on said sensor region, during normal operation, and wherein the sidewalls of said channel in contact with the sensing surface are constructed from a deformable material. In certain such embodiments, one or more of such features may be further characterised as described in co-pending patent application EP10171508.4, the contents of which are incorporated herein by reference.

The microfluidic device of the present invention provides flexibility in the throughput and/or complexity of the processes that can be subjected on one or more sample liquids via or upon exposure to one or more sample regions, and said device can be used in within various inventive processes.

Accordingly, in a second aspect the invention relates to a method to expose a plurality of sample liquids to a plurality of sample regions comprised in a microfluidic device of the invention, said method comprising the steps of:
- setting at least the first (input) and the second (output) selection valves of said device to provide liquid continuity from the sample input to the sample output via a first set of sample regions; and
- introducing a first sample liquid into the sample input, whereby said first sample liquid flows via and is exposed to said first set of sample regions; and
- setting at least said first (input) and said second (output) selection valves to provide liquid continuity from the sample input to the sample output via a second set of sample regions; and
- introducing a second sample liquid into the sample input, whereby said second sample liquid flows via and is exposed to said second set of sample regions.

In those embodiments of the method that utilise a microfluidic device that comprises at least one switching valve, the method may be further characterised in that one (or both) of the setting steps further include the setting of said switching valve.

In certain embodiments of the inventive method, the first and second sets of sample regions differ by at least one individual sample region. Preferably the first and second sets of sample regions differ by all individual sample regions; and/or each set of sample regions is a number, less than the total number, of sample regions. In particular such embodiments, each set of sample regions is an individual sample region. Accordingly, in certain embodiments, said method is a method to selectively expose a plurality of samples liquids to a plurality of sample regions comprised in a microfluidic device of the invention.

The inventive method described above provides a method (that uses a microfluidic device of the invention) to expose two sample liquids to two (sets of) sample regions. However, certain embodiments of the method further comprise repeating a pair of setting and introducing steps, such that at least one additional sample liquid is exposed to at least one further sample region (or subset of sample regions). By such repetition, such as by repeating such pair of steps of the method 2, 3, 4 about 5 or about 10 times, multiple sample liquids can be exposed to multiple (sets of) sample regions. Indeed, in preferred embodiments of the method, such steps are repeated until at least one sample liquid has been exposed to each sample region of the plurality of sample regions comprised in the microfluidic device.

In certain applications or processes to which the sample liquids, device or sample regions are to be subjected to or used for, a single sample liquid may be desired or required to be exposed to a multitude of sample regions (for example, to be exposed to all the sample region within the device). Accordingly, in particular embodiments the method further comprises the steps of:
- setting at least the first (input) and the second (output) selection valves to provide liquid continuity from the sample input to the sample output via a multitude (such as all) of the plurality of sample regions; and
- introducing a common sample liquid into the sample input, whereby said common sample liquid flows via and is exposed to said multitude of the plurality of sample regions.

As will now be recognised by the person of ordinary skill, such additional steps to expose a common sample liquid to said multitude of the plurality of sample regions may be practiced before and/or after the setting/introducing steps for any given sample liquid. For example, a common liquid may be first exposed to all sample regions that are sensor regions (such as SAW sensors) to prepare all sensor regions to detect the same particular analyte, and then individual sample liquids are exposed to individual sensor regions to detect the presence of the same analyte in the different sample regions. As an alternative example, the individual sensor regions may be first exposed to individual sample liquids to prepare them to each detect a different analyte, and then a common sample liquid is exposed to all sensor regions to detect the presence of the various different analytes in the single common sample liquid. Whether said additional steps to expose a common sample liquid to said multitude of the plurality of sample regions are practiced before or after the other steps of the method of the invention, will depend on the particular application or use of the device or the process to be practiced. The microfluidic devices and methods of the invention provides the possibility for such flexibility.

Accordingly, the method of the invention may be performed for the detection of: a plurality of analytes in an individual sample liquid; and/or an individual analyte in a plurality of sample liquids. In certain such embodiments at least two sample regions (preferably all sample regions of the device) are adapted to detect the presence of at least one analyte in a sample liquid. In one of those embodiments of the inventive methods herein directed to the detection of analytes in a sample liquid, it is preferred if at least one of said sample regions is a biosensor. Preferably, all of said sample regions are biosensors, and/or are SAW sensors.

In certain embodiments of the methods directed to detection, at least two of said sensor regions are each adapted to detect the presence of different analytes by first practicing a method described above to expose two sample liquids to two (sets) of sample liquids, and then detecting of the presence of such at least two analytes in a common sample liquid by practicing the method described above to expose a common liquid to said sample regions. In alternative embodiments however, at least two of said sample regions are each first adapted to detect the presence of the same analyte (by practicing the method described above to expose a common liquid to said sample regions), and then detecting the presence of such analyte in at least two sample liquids by practicing the method described above to expose two sample liquids to two different (sets of) sample regions.

Any of the methods of the invention may further comprise the step of controlling and/or checking the setting of the first (input) selection, the second (output) selection and/or, if provided, at least one switching valve. Preferably, such controlling and/or checking step occurs before the respective step that introduces a sample liquid into the microfluidic device, such as before a liquid drive source is activated. Such controlling and/or checking step may be conducted by the operator of the device, or may make use of optional features of the device incorporated or adapted to facilitate and/or conduct such controlling and/or checking step.

In a related aspect, the invention relates to **a method to detect** the presence of a plurality of analytes in a sample liquid using a microfluidic device of the invention comprising a plurality of sensor regions (such as SAW sensors), said method comprising the steps of:
- exposing at least two sample liquids to two different (sets of) sensor regions so as to prepare said different sensor regions for the detection of different analytes (such as by practicing such a method described above); and
- exposes a common liquid to said sensor regions (such as by practicing such a method described above); and
- detecting the presence (or absence) of each analyte in the common sample liquid by measuring a change in property of each sensor region (or set thereof).

In certain embodiments of such method, the step of exposing a given sample liquid to a different sensor region (or set thereof) is repeated until sensor regions have been prepared to detect all of the plurality of analytes.

In an alternative to such related aspect, the invention also relates to **a method to detect** the presence of an analyte in a plurality of sample liquids using a microfluidic device of the invention comprising a plurality of sensor regions (such as SAW sensors), said method comprising the steps of:
- exposing a common liquid to said sensor regions so as to prepare said plurality of sensor regions for the detection of said analyte (such as by practicing such a method described above); and
- exposing at least two sample liquids to two different (sets of) sensor regions (such as by practicing such a method described above); and
- detecting the presence (or absence) of the analyte in each sample liquid by measuring a change in property of each sensor region (of set thereof).

In certain embodiments of such method, the step of exposing a given sample liquid and the associated detection step is repeated until all of the plurality of sample liquids have been exposed to a different sensor regions (or sets thereof).

As will now be understood by the person of ordinary skill, in particular embodiments, one or other of the above methods to detect may be practiced before the other, should the required detection process so require such complexity or throughput.

In another aspect, the invention relates to **a method to prepare for use** a microfluidic device of the invention, wherein said device comprises at least two subunits and at least one a switching valve with a fill/flush functionality as described above, and wherein at least one of said subunits have previously been manipulated, said method comprising the steps of:
- setting the first (input) selection valve, the second (output) selection valve and the switching valve so that sample liquid can flow through said previously manipulated subunit and to the second (output) selection valve without passing into another subunit of the device; and
- introducing sample liquid into said device so as to prepare said previously manipulated subunit.

In a particular embodiment, this method further comprises the steps of: resetting the valves so that sample liquid can flow through at least one other subunit of the device and to the second (output) selection valve without passing into the previously manipulated subunit; and introducing sample liquid into said device so as to prepare at least one other subunit of the device.

In certain of such embodiments, this method further comprises, prior to or after said setting/introducing steps, the step of setting the first (input) selection valve, the second (output) selection valve and the switching valve so that fluid can flow through the entire manipulated subunit and/or the entire fluidic system of said device and then introducing a gas, such as air, to expel and/or dry any sample liquid remaining in said manipulated subunit and/or the device.

In certain of such embodiments, each of said subunits comprise a flow-cell as described herein and a sensor surface comprising a plurality of sensor regions, such as SAW sensors.

The microfluidic device of the invention may be incorporated, or a method of the invention may be practiced, as part of an apparatus. Accordingly, a third aspect of the invention relates to **an apparatus** that comprises a microfluidic device of the present invention, and/or an apparatus for (such as one useful for or specifically adapted for) practicing a method of the present invention. Preferably said apparatus includes or uses a microfluidic device that is a multichannel biosensor device, such as a multichannel SAW sensor device.

In certain embodiments, the apparatus of the invention further comprises an autosampler. The term "autosampler" is well known to the person of ordinary skill, and includes mechanical systems that are able to address and remove (preferably individually) specific sample liquids from a plurality of sample liquids. Typically, the plurality of sample liquids are presented as an array of containers such as tubes or in a microtiter plate, and the autosampler uses a position-controllable sampling tube or needle that can move in three dimensions relative to the array of containers (for example using a Cartesian electro-mechanical positioning system) so that each sample liquid in the array can be located in 2-dimensions and then sampled by moving the tube/needle in the third dimension. Manufacturers of suitable autosamplers will be well known, and include Spark Holland.

In yet other embodiments the apparatus of the invention further comprises a computer program product. Preferably said computer program product is adapted to control a microfluidic device of the invention, adapted to practice a method of the invention, and/or said computer program product comprising instructions to practice or control the steps of a method of the invention. The computer program product may comprise a data carrier that includes data representing a computer program useful for the apparatus. For example, the computer program product may be an EPROM, RAM, ROM, hard-disc, SSD, USB memory-stick or CD/DVD, or it may be an external personal-computer, a programmable logic controller (PLC) or a main-board, in each case comprising data that represents a suitable computer program. The computer program product may comprise or further comprise a license key (such as one provided separately on a license-label or as separate information, or may be one stored on or using a USB dongle) that unlocks or permits the starting of the (full) functionality of a pre-loaded or separately supplied computer program, or it may be instructions (such as a web page address and/or log-in/password) describing how a computer program may be obtained, loaded or down-loaded.

In another aspect, the invention relates to **a flow-cell** as described, defined or claimed herein. Preferably said flow-cell is for (or is useful for or specifically adapted for) the microfluidic device of the invention, such as having the flow-boundaries as generally represented by (21) in FIGURE 2 or by (31) in FIGURE 3.

In yet another aspect, the invention also relates to a **computer program product**, as described, defined or claimed herein. Preferably said computer program product is for (or is useful for or specifically adapted for) the microfluidic device of the invention or the practice of the method of the invention.

It is to be understood that application of the teachings of the present invention to a specific problem or environment, and the inclusion of variations of the present invention or additional features thereto, will be within the capabilities of one having ordinary skill in the art in light of the teachings contained herein. Representative examples of the devices, apparatuses and other aspects of the present invention and representative methods or processes for their use appear herein, and should not be taken to limit the scope of the present invention to only such representative examples.

All references, patents, and publications cited herein are hereby incorporated by reference in their entirety.

## Claims

1. **A microfluidic device** for liquids comprising:
• A plurality of sample regions connectable in serial liquid continuity via at least one connection channels; and
• A first (input) selection valve with a sample input and plurality of outputs, each valve output connectable to an input for a sample region via a liquid channel; and
• A second (output) selection valve with an sample output and a plurality of inputs, each valve input connectable to an output for a sample region via a liquid channel.

2. The microfluidic device of claim 1, wherein:
• each sample region has an input connectable to a specific output of the first (input) selection valve; and/or
• each sample region has an output connectable to a specific input of the second (output) selection valve.

3. The microfluidic device of claim 2, wherein its components are arranged such that liquid can flow either: (a) via any single sample region; or (b) via at least two sample regions, wherein said flow depends on at least the setting of the first (input) valve and/or of the second (output) selection valve.

4. The microfluidic device of any one of claims 1 to 3, wherein at least one sample region comprises a SAW sensor;
- *preferably* wherein the SAW sensor has a surface area of between about 4 mm² and 8 mm² such as about 6.0 mm² or 6.8 mm².

5. The microfluidic device of any one of claims 1 to 4, wherein:
• for at least two sample regions, their associated inputs and outputs are in liquid continuity via separate connections to their respective sample region; and/or
• at least one sample region comprises, and/or is at least partially formed by, a separable subunit of the microfluidic device; and/or
• at least two sample regions and their associated connecting channel(s) together comprise a flow-cell;
- *preferably* wherein said flow-cell comprises flow boundaries as represented generally by those shown by (21) in FIGURE 2 or (31) in FIGURE 3.

6. The microfluidic device of claim 5, wherein:
• at least two sample regions and their associated connecting channel(s) together comprise a flow-cell; and
• said flow-cell comprises a separable sub-unit of the microfluidic device adapted to form said sample regions and their associated connecting channel(s) when brought into contact with another subunit of the microfluidic device.

7. The microfluidic device of claim 6, wherein said flow-cell comprises a number of sample regions selected from the group consisting of: 2, 3, 4, 5, 6, 7, 8, 9, 10, 11 and 12;
- *preferably* wherein the microfluidic device comprises between 2 and about 5 of such flow-cells; and/or
- preferably wherein the microfluidic device comprises the liquid continuities as represented generally by FIGURE 4.

8. The microfluidic device of any one of claims 1 to 7, further comprising at least one switching valve connectable to at least: (i) an output of a first sample region; (ii) an input for a second sample region; (iii) an input for the second (output) selection valve; such that liquid-flow from the output of the first sample region can be switched either to the input for the second sample region or to the input for the second (output) selection valve;
- *preferably* wherein, said switching valve is further connected to (iv) an output of the first (input) selection valve; such that liquid-flow for input into said second sample region can be switched from said output of the first (input) selection valve or from said output of said first sample region; and/or
- *preferably* wherein the microfluidic device comprises the liquid continuities as represented generally by FIGURE 5 or FIGURE 6; and/or
- *preferably* wherein the microfluidic device comprises at least two flow cells, each comprising flow-boundaries as generally represented by (21) in FIGURE 2 or by (31) in FIGURE 3.

9. The microfluidic device of claim 8, wherein said first sample region is non-adjacent to said second sample regions and are connectable to switching valve via bridging connectors;
such that liquid-flow from the output from the first sample region can be switched either to the input for the non-adjacent (second) sample region or to the input for the second (output) selection valve.

10. The microfluidic device of claim 9 comprising a first plurality of sample regions, a second plurality of sample regions, said switching valve and said bridging channels; wherein said components are in liquid continuity, such that depending on the setting of said switching valve, liquid can:
• pass through the last sample region of the first plurality of sample regions to the initial sample region of the second plurality of sample regions; or
• pass via bridging channels from an intermediate (first) sample region of the first plurality of sample regions to a (second) sample region of the second plurality of sample regions, wherein said (second) sample region is non-adjacent to said intermediate (first) sample region;
- *preferably* wherein said microfluidic device comprises the fluid continuities as represented generally by FIGURE 7 or FIGURE 8; and/or
- *preferably* wherein said microfluidic device comprises at least two flow cells, each comprising flow-boundaries as generally represented by (21) in FIGURE 2 or by (31) in FIGURE 3.

11. The microfluidic device of claim 8, further comprising a second switching valve, wherein:
• the (first) switching valve is arranged to switch liquid-flow from the output of a first sample region to either the second (output) selection valve or to the input for a second sample region that is adjacent to said first sample region; and
• said second switching valve is arranged to switch liquid-flow from the output of an intermediate (first) sample region to either the second (output) selection valve or to an input of a non-adjacent (second) sample region;
- *preferably* wherein each switching valve is further connected to at least an output of the first (input) selection valve; such that liquid-flow for input into the respective second sample region can be switched from either said output of the first (input) selection valve or from said output of the respective first sample region; and/or
- *preferably* wherein said microfluidic device comprises the liquid continuities as represented generally by FIGURE 9; and/or
- *preferably* wherein said microfluidic device comprises at least two flow-cells, each comprising flow-boundaries as generally represented by (21) in FIGURE 2 or by (31) in FIGURE 3.

12. The microfluidic device of claim 8, wherein said selection valve, in addition to the said connections (i) to (iv), is further connectable to at least: (v) an output of a third sample region; and (vi) an input for a fourth sample region; and wherein said first and second sample regions are adjacent to each other, and said third and fourth sample regions are non-adjacent to each other; such that:
• liquid-flow from the output of the third sample region is arranged to switch either to the input for the fourth (non-adjacent) sample region or to the input for the second (output) selection valve; and
• liquid-flow for input into said second sample region is arranged to switch either from said output of the first (input) selection valve or from said output of said first (adjacent) sample region; and
• liquid-flow for input into said fourth sample region can be switched either from said output of said first (input) selection valve or from said output of said third (non-adjacent) sample region;
- *preferably* wherein said microfluidic device comprises the liquid continuities as represented generally by FIGURE 10; and/or
- *preferably* wherein said microfluidic device comprises at least two flow-cells, each comprising flow-boundaries as generally represented by (21) in FIGURE 2 or by (31) in FIGURE 3.

13. **A method to expose** a plurality of sample liquids to a plurality of sample regions comprised in a microfluidic device of any one of claims 1 to 12, said method comprising the steps of:
• setting at least the first (input) and the second (output) selection valves of said device to provide liquid continuity from the sample input to the sample output via a first set of sample regions; and
• introducing a first sample liquid into the sample input, whereby said first sample liquid flows via and is exposed to said first set of sample regions; and
• setting at least said first (input) and said second (output) selection valves to provide liquid continuity from the sample input to the sample output via a second set of sample regions; and
• introducing a second sample liquid into the sample input, whereby said second sample liquid flows via and is exposed to said second set of sample regions.

14. The method of claim 13, wherein said sample regions are comprised in a microfluidic device of any one of claims 8 to 12, and at least one of said setting steps further comprises the setting at least one switching valve.

15. The method of claim 13 or 14, wherein:
• the first and second sets of sample regions differ by at least one individual sample region, *preferably* wherein the first and second sets of sample regions differ by all individual sample regions; and/or
• each set of sample regions is a number, less than the total number, of sample regions, *preferably* wherein each set of sample regions is an individual sample region.

16. The method of any one of claims 13 to 15, further comprising repeating the setting and introducing steps, such that at least one additional sample liquid is exposed to at least one further subset of sample regions;
- *preferably* wherein such steps are repeated until at least one sample liquid has been exposed to each sample region of said plurality.

17. The method of any one of claims 13 to 16, further comprising the steps of:
• setting at least the first (input) and the second (output) selection valves to provide liquid continuity from the sample input to the sample output via a multitude of the plurality of sample regions; and
• introducing a common sample liquid into the sample input, whereby said common sample liquid flows via and is exposed to said multitude of the plurality of sample regions.

18. The method of any one of claims 13 to 17, for the detection of:
• a plurality of analytes in an individual sample liquid; and/or
• an individual analyte in a plurality of sample liquids.

19. The method of claim 18, wherein:
• at least two of said sensor regions are each adapted to detect the presence of different analytes by first practicing the method of any one of claims 13 to 18, and then detecting of the presence of such at least two analytes in a common sample liquid; or
• at least two of said sample regions are each adapted to detect the presence of the same analyte, and then detecting the presence of such analyte in at least two sample liquids by practicing the method of any one of claims 13 to 18.

20. An **apparatus** comprising a microfluidic device of any one of claims 1 to 12;
- *preferably* wherein said microfluidic device is a multichannel biosensor apparatus.

21. A **method to prepare for use** a microfluidic device of any one of claims 1 to 12, wherein said device comprises at least two subunits and at least one switching valve with a fill/flush functionality as described in any of the preceding claims, and wherein at least one of said subunits have previously been manipulated, said method comprising the steps of:
• setting the first (input) selection valve, the second (output) selection valve and said switching valve so that sample liquid can flow through said previously manipulated subunit and to the second (output) selection valve without passing into another subunit of the device; and
• introducing sample liquid into said device so as to prepare said previously manipulated subunit.
